# NEUE EUROPÄISCHE PATENTSCHRIFT

(11) **EP 3 114 204 B2**
(45) Veröffentlichungstag und Bekanntmachung des Hinweises auf die Entscheidung über den Einspruch: **07.07.2021**
(45) Hinweis auf die Patenterteilung: 08.08.2018
(21) Anmeldenummer: 15709111.7
(22) Anmeldetag: 18.02.2015
(51) Int. Cl.: C12C 7/22, C12C 7/26

(54) **VERFAHREN UND VORRICHTUNG ZUR HERSTELLUNG EINES FLÜSSIGEN LEBENSMITTELS**
METHOD AND DEVICE FOR PRODUCING A LIQUID FOODSTUFF
PROCÉDÉ ET DISPOSITIF DE PRÉPARATION D'UN ALIMENT LIQUIDE

(30) Priorität: 04.03.2014 DE 102014102854
(43) Veröffentlichungstag der Anmeldung: 11.01.2017
(73) Patentinhaber: ZIEMANN HOLVRIEKA GmbH, 71636 Ludwigsburg (DE)
(72) Erfinder: GEHRIG, Klaus, 71640 Ludwigsburg (DE); WASMUHT, Klaus Karl, 91792 Ellingen (DE); BECHER, Tobias, 71701 Schwieberdingen (DE); BLOMENHOFER, Verena, 74357 Bönnigheim (DE); LINK, Albert, 84072 Au in der Hallertau (DE)
(74) Vertreter: Kuhnen & Wacker Patent- und Rechtsanwaltsbüro PartG mbB
(86) Internationale Anmeldenummer: PCT/EP2015/053427
(87) Internationale Veröffentlichungsnummer: WO 2015/132073

(56) Entgegenhaltungen:
- DE-A1-102009 055 300
- DE-A1-102010 042 765
- DE-A1-102011 055 146
- DE-C1- 4 304 975

## Beschreibung

Die vorliegende Erfindung betrifft ein Verfahren zur Herstellung eines flüssigen Lebensmittels, vorzugsweise eines Getränks, insbesondere eines Bieres oder Biermischgetränks, wobei dieses Verfahren ermöglicht, die Energiebilanz der Herstellung zu verbessern. Darüber hinaus betrifft die Erfindung eine Vorrichtung zur Durchführung des Verfahrens und eine entsprechende Verwendung.

Die Herstellung von flüssigen Lebensmitteln, insbesondere von Getränken wie Bier, ist durch umfangreiche Stoff- und Energieströme gekennzeichnet. Dabei ist eine große Menge Energie einerseits zum Erwärmen der Rohstoffe, des fertigen Lebensmittels oder seiner Vorstufen erforderlich. Andererseits wird eine erhebliche Menge Energie zum Kühlen der Zwischenerzeugnisse oder Enderzeugnisse verbraucht. Durch Abkühlen eines kalten, verkaufsfertigen Lebensmittels in die Verkaufsgebinde geht die im Lebensmittel gespeicherte Kälteenergie verloren. Darüber hinaus kommt es zu einer unerwünschten Kondensation der Luftfeuchtigkeit an der Oberfläche des Verkaufsgebindes, falls die Temperatur der Oberfläche des gefüllten Gebindes unterhalb der Umgebungstemperatur liegt.

### Aufgabe der Erfindung

Der Erfindung liegt daher die Aufgabe zu Grunde, ein Verfahren zur Herstellung eines flüssigen Lebensmittels, vorzugsweise eines Getränks, insbesondere eines Bieres oder Biermischgetränks, bereitzustellen, dessen Energiebilanz verbessert ist. Insbesondere ist es eine Aufgabe, den Verbrauch von Kälte oder der zur Erzeugung von Kälte eingesetzten Energie bei diesem Herstellungsverfahren zu vermindern.

Ferner ist es eine Aufgabe der Erfindung, eine Vorrichtung zur Durchführung des Verfahrens bereitzustellen.

### Zusammenfassung der Erfindung

Die vorstehend definierte Aufgabe wird in verfahrenstechnischer Hinsicht durch das Verfahren mit den Merkmalen des Anspruchs 1 gelöst.

Das erfindungsgemäße Verfahren zur Herstellung eines flüssigen Lebensmittels weist wenigstens die Schritte auf:
(a) Herstellen einer ersten Teilmenge LM1, welche eine Vorstufe eines flüssigen Lebensmittels LM ist;
(b) Abkühlen der ersten Teilmenge LM1 mittels eines ersten Teilvolumens WT1 eines Wärmeträgers WT;
   wobei das erste Teilvolumen WT1 erwärmt wird;
   wobei das erste Teilvolumen WT1 vor dem Erwärmen einem zweiten Speicher SP2 entnommen wird; und
   wobei das erste Teilvolumen WT1 nach dem Erwärmen in einen ersten Speicher SP1 eingelagert wird;
(c) Weiterverarbeiten der ersten Teilmenge LM1 zu einer zweiten Teilmenge LM2, welche das flüssige Lebensmittel LM in abfüllfertiger oder verkaufsfertiger Gestalt oder einer weiteren Vorstufe des flüssigen Lebensmittels LM ist;
(d) Erwärmen der zweiten Teilmenge LM2 mittels eines zweiten Teilvolumens WT2 eines Wärmeträgers WT auf eine Temperatur von höchstens 40 °C, vorzugsweise höchstens 30 °C, vorzugsweise höchstens 20 °C, insbesondere höchstens 16 °C;
   wobei das zweite Teilvolumen WT2 abgekühlt wird;
   wobei das zweite Teilvolumen WT2 vor dem Abkühlen dem ersten Speicher SP1 entnommen wird; und
   wobei das zweite Teilvolumen WT2 nach dem Abkühlen in den zweiten Speicher SP2 eingelagert wird;
(g) nach Schritt (d), Abfüllen der zweiten Teilmenge LM2 mit einer Temperatur im Bereich von 4 bis 40 °C in Behälter, vorzugsweise verkaufsfertige Gebinde.

Bei diesem Verfahren wird erstmals die in Gestalt von Kälte in einem flüssigen Lebensmittel gespeicherte Energie durch Abkühlen eines Wärmeträgers unter gleichzeitigem Erwärmen des Lebensmittels vor seiner Abfüllung wiedergewonnen. Die auf diese Weise aus dem abfüll- oder verkaufsfertigen Lebensmittel gewonnene Kälte kann dann an anderer Stelle des Herstellungsverfahrens mittels des abgekühlten Wärmeträgers verwendet werden. Insbesondere kann der abgekühlte Wärmeträger zur Aufnahme von Wärme und damit zum Abkühlen von Vorstufen des Lebensmittels mit höherer Temperatur verwendet werden.

Hierdurch wird die im Rahmen des Herstellungsverfahrens erforderliche Menge an Kälte, welche unter Aufwendung von Energie, insbesondere von Primärenergie, erzeugt werden muss, vermindert.

Letztlich werden erfindungsgemäß eine Optimierung der Energieströme und damit eine Senkung des Energieverbrauchs durch das erfindungsgemäße Verfahren erzielt.

Zudem wird dank des Einsatzes von Speichern eine zeitliche und mengenmäßige Entkopplung von Kältebedarf und -anfalls bzw. des Wärmebedarfs und -anfalls erzielt.

Darüber hinaus wird durch ein Erwärmen des Lebensmittels vor dessen Abfüllung eine Kondensation von Luftfeuchtigkeit an der Oberfläche des mit dem flüssigen Lebensmittel befüllten Verkaufsgebindes vermeiden oder wenigstens vermindert.

Vorteilhafte Ausführungsformen des erfindungsgemäßen Verfahrens sind Gegenstände der abhängigen Verfahrensansprüche.

Beim erfindungsgemäßen Verfahren kann das flüssige Lebensmittel (LM) ein Getränk, vorzugsweise ein nichtalkoholisches Getränk, ein Bier oder ein Biermischgetränk, sein.

Ferner kann das erfindungsgemäße Verfahren den Schritt aufweisen:
(e) vor Schritt (b) Abkühlen der ersten Teilmenge LM1 mittels eines dritten Teilvolumens WT3 des Wärmeträgers WT;
wobei das dritte Teilvolumen WT3 erwärmt wird;
wobei das dritte Teilvolumen WT3 vor dem Erwärmen dem ersten Speicher SP1 entnommen wird; und
wobei das dritte Teilvolumen WT3 nach dem Erwärmen in den ersten Speicher SP1 eingelagert wird.

Durch das insgesamt zweistufige Abkühlen der ersten Teilmenge in den Schritten (e) und (b) wird die Gewinnung zweier Teilvolumina des Wärmeträgers mit unterschiedlicher Temperatur ermöglicht. Insbesondere wird die Gewinnung eines Wärmeträger-Teilvolumens mit hoher Temperatur, beispielsweise im Bereich von 80 bis 105 °C, ermöglicht. Wärmeträgerchargen mit einer derart hohen Temperatur stellen eine hochwertige Energiequelle dar, da sie an anderer Stelle des Herstellungsverfahrens, beispielsweise zum effizienten Erwärmen eines wässerigen Fluids auf eine hohe Temperatur bis zur Siedetemperatur oder nahe daran, besonders nutzbringend und energieeffizient eingesetzt werden können.

Darüber hinaus kann das erfindungsgemäße Verfahren den Schritt aufweisen:
(f) nach Schritt (d) Erwärmen der zweiten Teilmenge LM2 mittels eines vierten Teilvolumens WT4 des Wärmeträgers WT, vorzugsweise auf eine Temperatur von höchstens 40 °C, vorzugsweise höchstens 30 °C, vorzugsweise höchstens 20 °C, insbesondere höchstens 16 °C;
wobei das vierte Teilvolumen WT4 abgekühlt wird;
wobei das vierte Teilvolumen WT4 vor dem Abkühlen dem ersten Speicher SP1 entnommen wird; und
wobei das vierte Teilvolumen WT4 nach dem Abkühlen in den ersten Speicher SP1 eingelagert wird.

Hierbei wird durch das insgesamt zweistufige Erwärmen der zweiten Teilmenge in den Schritten (d) und (f) die Gewinnung zweier Teilvolumina des Wärmeträgers mit unterschiedlicher Temperatur ermöglicht. Insbesondere wird die Gewinnung eines Wärmeträger-Teilvolumens mit geringer Temperatur, beispielsweise im Bereich von beispielsweise im Bereich von -4 bis 4 °C, ermöglicht. Wärmeträgerchargen mit einer derart geringen Temperatur stellen eine hochwertige Kältequelle dar, da sie an anderer Stelle des Herstellungsverfahrens, beispielsweise zum effizienten Abkühlen eines wässerigen Fluids auf eine niedrige Temperatur bis zu dessen Gefrierpunkt oder nahe daran oder einer anderen Temperatur, wie beispielsweise eine Anstelltemperatur, besonders nutzbringend und energieeffizient eingesetzt werden können.

Insbesondere kann das erfindungsgemäße Herstellungsverfahren auch eine Kombination der beiden vorstehend beschriebenen Verfahrensschritte (e) und (f) in einem einzigen Verfahren verwirklichen.

Durch das sowohl zweistufige Abkühlen der ersten Teilmenge, als auch der zweistufige Erwärmen der zweiten Teilmenge lassen sich die vorstehend genannten Vorteile in einem Verfahren kombiniert verwirklichen.

In einer vorteilhaften Ausführungsform ist das erfindungsgemäße Verfahren mit einstufigem Abkühlen der ersten Teilmenge LM1 und einstufigem Erwärmen der zweiten Teilmenge LM2 dadurch gekennzeichnet, dass:
- in Schritt (b) die erste Teilmenge LM1 vor dem Abkühlen eine Temperatur im Bereich von 80 bis 105 °C, vorzugsweise 80 bis 99 °C, aufweist;
- in Schritt (b) die erste Teilmenge LM1 nach dem Abkühlen eine Temperatur im Bereich von 6 bis 22 °C, vorzugsweise 6 bis 14 °C, insbesondere 7 bis 9 °C, aufweist;
- in Schritt (b) das erste Teilvolumen WT1 vor dem Erwärmen eine Temperatur im Bereich von -10 bis 8 °C, vorzugsweise -6 bis 5 °C, insbesondere 0 bis 5 °C, aufweist;
- in Schritt (b) das erste Teilvolumen WT1 nach dem Erwärmen eine Temperatur im Bereich von 90 bis 100 °C, vorzugsweise 93 bis 97 °C, aufweist;
- in Schritt (d) die zweite Teilmenge LM2 vor dem Erwärmen eine Temperatur im Bereich von -5 bis 8 °C, vorzugsweise -2 bis 4 °C, insbesondere -1 bis 2 °C, aufweist;
- in Schritt (d) die zweite Teilmenge LM2 nach dem Erwärmen eine Temperatur im Bereich von 4 bis 30 °C, vorzugsweise 4 bis 20 °C, insbesondere 8 bis 16 °C, aufweist;
- in Schritt (d) das zweite Teilvolumen WT2 vor dem Abkühlen eine Temperatur im Bereich von 12 bis 97 °C, vorzugsweise 12 bis 20 °C, aufweist; und
- in Schritt (d) das zweite Teilvolumen WT2 nach dem Abkühlen eine Temperatur im Bereich von -4 bis 4 °C, vorzugsweise -1 bis 4 °C, insbesondere 0 bis 4 °C, aufweist.

In einer weiteren vorteilhaften Ausführungsform ist das erfindungsgemäße Verfahren mit zweistufigem Abkühlen der ersten Teilmenge LM1 und einstufigem Erwärmen der zweiten Teilmenge LM2 dadurch gekennzeichnet, dass:
- in Schritt (b) die erste Teilmenge LM1 vor dem Abkühlen eine Temperatur im Bereich von 10 bis 30 °C, vorzugsweise 15 bis 23 °C, aufweist;
- in Schritt (b) die erste Teilmenge LM1 nach dem Abkühlen eine Temperatur im Bereich von 6 bis 22 °C, vorzugsweise 6 bis 14 °C, insbesondere 7 bis 12 °C, aufweist;
- in Schritt (b) das erste Teilvolumen WT1 vor dem Erwärmen eine Temperatur im Bereich von -10 bis 8 °C, vorzugsweise -4 bis 5 °C, insbesondere 1 bis 5 °C, aufweist;
- in Schritt (b) das erste Teilvolumen WT1 nach dem Erwärmen eine Temperatur im Bereich von 12 bis 20 °C, vorzugsweise 16 bis 20 °C, aufweist;
- in Schritt (d) die zweite Teilmenge LM2 vor dem Erwärmen eine Temperatur im Bereich von -5 bis 8 °C, vorzugsweise -2 bis 4 °C, insbesondere -1 bis 2 °C, aufweist;
- in Schritt (d) die zweite Teilmenge LM2 nach dem Erwärmen eine Temperatur im Bereich von 4 bis 30 °C, vorzugsweise 4 bis 20 °C, insbesondere 8 bis 16 °C, aufweist;
- in Schritt (d) das zweite Teilvolumen WT2 vor dem Abkühlen eine Temperatur im Bereich von 12 bis 97 °C, vorzugsweise 12 bis 20 °C, aufweist;
- in Schritt (d) das zweite Teilvolumen WT2 nach dem Abkühlen eine Temperatur im Bereich von -4 bis 4 °C, vorzugsweise -1 bis 4 °C, insbesondere 0 bis 4 °C, aufweist;
- in Schritt (e) die erste Teilmenge LM1 vor dem Abkühlen eine Temperatur im Bereich von 80 bis 105 °C, vorzugsweise 80 bis 99 °C, aufweist;
- in Schritt (e) die erste Teilmenge LM1 nach dem Abkühlen eine Temperatur im Bereich von 10 bis 30 °C, vorzugsweise 15 bis 23 °C, aufweist;
- in Schritt (e) das dritte Teilvolumen WT3 vor dem Erwärmen eine Temperatur im Bereich von 12 bis 97 °C, vorzugsweise 12 bis 20 °C, aufweist; und
- in Schritt (e) das dritte Teilvolumen WT3 nach dem Erwärmen eine Temperatur im Bereich von 90 bis 100 °C, vorzugsweise 93 bis 97 °C, aufweist.

In einer weiteren vorteilhaften Ausführungsform ist das erfindungsgemäße Verfahren mit einstufigem Abkühlen der ersten Teilmenge LM1 und zweistufigem Erwärmen der zweiten Teilmenge LM2 dadurch gekennzeichnet, dass:
- in Schritt (b) die erste Teilmenge LM1 vor dem Abkühlen eine Temperatur im Bereich von 80 bis 105 °C, vorzugsweise 80 bis 99 °C, aufweist;
- in Schritt (b) die erste Teilmenge LM1 nach dem Abkühlen eine Temperatur im Bereich von 6 bis 22 °C, vorzugsweise 6 bis 14 °C, insbesondere 7 bis 12 °C, aufweist;
- in Schritt (b) das erste Teilvolumen WT1 vor dem Erwärmen eine Temperatur im Bereich von -10 bis 8 °C, vorzugsweise -4 bis 5 °C, insbesondere 0 bis 5 °C, aufweist;
- in Schritt (b) das erste Teilvolumen WT1 nach dem Erwärmen eine Temperatur im Bereich von 90 bis 100 °C, vorzugsweise 93 bis 97 °C, aufweist;
- in Schritt (d) die zweite Teilmenge LM2 vor dem Erwärmen eine Temperatur im Bereich von -5 bis 8 °C, vorzugsweise -2 bis 4 °C, insbesondere -1 bis 2 °C, aufweist;
- in Schritt (d) die zweite Teilmenge LM2 nach dem Erwärmen eine Temperatur im Bereich von 1 bis 6 °C, vorzugsweise 2 bis 4 °C, aufweist;
- in Schritt (d) das zweite Teilvolumen WT2 vor dem Abkühlen eine Temperatur im Bereich von 12 bis 97 °C, vorzugsweise 12 bis 20 °C, aufweist;
- in Schritt (d) das zweite Teilvolumen WT2 nach dem Abkühlen eine Temperatur im Bereich von -4 bis 4 °C, vorzugsweise -1 bis 4 °C, insbesondere 0 bis 4 °C, aufweist;
- in Schritt (f) die zweite Teilmenge LM2 vor dem Erwärmen eine Temperatur im Bereich von 1 bis 6 °C, vorzugsweise 2 bis 4 °C, aufweist;
- in Schritt (f) die zweite Teilmenge LM2 nach dem Erwärmen eine Temperatur im Bereich von 4 bis 30 °C, vorzugsweise 4 bis 20 °C, vorzugsweise 6 bis 20 °C, insbesondere 8 bis 16 °C, aufweist;
- in Schritt (f) das vierte Teilvolumen WT4 vor dem Abkühlen eine Temperatur im Bereich von 12 bis 97 °C, vorzugsweise 12 bis 20 °C, aufweist; und
- in Schritt (f) das vierte Teilvolumen WT4 nach dem Abkühlen eine Temperatur im Bereich von 4 bis 10 °C, vorzugsweise 6 bis 8 °C, aufweist.

In einer weiteren vorteilhaften Ausführungsform ist das erfindungsgemäße Verfahren mit zweistufigem Abkühlen der ersten Teilmenge LM1 und zweistufigem Erwärmen der zweiten Teilmenge LM2 dadurch gekennzeichnet, dass:
- in Schritt (b) die erste Teilmenge LM1 vor dem Abkühlen eine Temperatur im Bereich von 10 bis 30 °C, vorzugsweise 15 bis 23 °C, aufweist;
- in Schritt (b) die erste Teilmenge LM1 nach dem Abkühlen eine Temperatur im Bereich von 6 bis 22 °C, vorzugsweise 6 bis 14 °C, insbesondere 7 bis 12 °C, aufweist;
- in Schritt (b) das erste Teilvolumen WT1 vor dem Erwärmen eine Temperatur im Bereich von -10 bis 8 °C, vorzugsweise -6 bis 5 °C, insbesondere 0 bis 5 °C, aufweist;
- in Schritt (b) das erste Teilvolumen WT1 nach dem Erwärmen eine Temperatur im Bereich von 12 bis 20 °C aufweist;
- in Schritt (d) die zweite Teilmenge LM2 vor dem Erwärmen eine Temperatur im Bereich von -5 bis 8 °C, vorzugsweise -2 bis 4 °C, insbesondere -1 bis 2 °C, aufweist;
- in Schritt (d) die zweite Teilmenge LM2 nach dem Erwärmen eine Temperatur im Bereich von 1 bis 6 °C, vorzugsweise 2 bis 4 °C, aufweist;
- in Schritt (d) das zweite Teilvolumen WT2 vor dem Abkühlen eine Temperatur im Bereich von 12 bis 97 °C, vorzugsweise 12 bis 20 °C, aufweist;
- in Schritt (d) das zweite Teilvolumen WT2 nach dem Abkühlen eine Temperatur im Bereich von -4 bis 4 °C, vorzugsweise -1 bis 4 °C, insbesondere 0 bis 4 °C, aufweist;
- in Schritt (e) die erste Teilmenge LM1 vor dem Abkühlen eine Temperatur im Bereich von 80 bis 105 °C, vorzugsweise 80 bis 99 °C, aufweist;
- in Schritt (e) die erste Teilmenge LM1 nach dem Abkühlen eine Temperatur im Bereich von 10 bis 30 °C, vorzugsweise 15 bis 23 °C, aufweist;
- in Schritt (e) das dritten Teilvolumen WT3 vor dem Erwärmen eine Temperatur im Bereich von 12 bis 97 °C, vorzugsweise 12 bis 20 °C, aufweist;
- in Schritt (e) das dritten Teilvolumen WT3 nach dem Erwärmen eine Temperatur im Bereich von 90 bis 100 °C, vorzugsweise 93 bis 97 °C, aufweist;
- in Schritt (f) die zweite Teilmenge LM2 vor dem Erwärmen eine Temperatur im Bereich von 1 bis 6 °C, vorzugsweise 2 bis 4 °C, aufweist;
- in Schritt (f) die zweite Teilmenge LM2 nach dem Erwärmen eine Temperatur im Bereich von 4 bis 30 °C, vorzugsweise 4 bis 20 °C, vorzugsweise 6 bis 20 °C, insbesondere 8 bis 16 °C, aufweist;
- in Schritt (f) das vierte Teilvolumen WT4 vor dem Abkühlen eine Temperatur im Bereich von 12 bis 97 °C, vorzugsweise 12 bis 20 °C, aufweist; und
- in Schritt (f) das vierte Teilvolumen WT4 nach dem Abkühlen eine Temperatur im Bereich von 4 bis 10 °C, vorzugsweise 6 bis 8 °C, aufweist.

Das Verfahren kann ferner den Schritt aufweisen:
(g1) nach Schritt (f) Abfüllen der zweiten Teilmenge LM2 mit einer Temperatur im Bereich von 4 bis 40 °C, vorzugsweise 4 bis 30 °C, vorzugsweise 4 bis 20 °C, vorzugsweise 6 bis 18 °C, insbesondere 8 bis 16 °C, in Behälter, vorzugsweise verkaufsfertige Gebinde,
wobei zwischen dem Schritt (f) und dem Abfüllen vorzugsweise ein Erwärmen der zweiten Teilmenge LM2 auf eine Temperatur mehr als 40 °C, vorzugsweise mehr als 30 °C, vorzugsweise mehr als 20 °C, insbesondere mehr als 16 °C unterbleibt.

Durch Abfüllen der zweiten Teilmenge, welche eine Temperatur in den angegebenen Bereichen aufweist, wird, wie vorstehend beschrieben, einerseits eine Rückgewinnung der Kälte weitgehend realisiert und andererseits die Kondensation an den abgefüllten Gebinden verhindert oder vermindert.

Darüber hinaus wird durch Einstellen einer moderaten Temperatur von maximal 40 °C, vorzugsweise maximal 30 °C, insbesondere maximal 20 °C, die Qualität des erzeugten, flüssigen Lebensmittels durch Vermeidung oder Minimierung von thermischer Belastung aufrechterhalten. So werden durch die Beschränkung auf die genannten Höchsttemperaturen thermisch bedingte Produktveränderungen, wie beispielsweise sensorische oder physikalische Alterung, vermieden oder wesentlich vermindert. Darüber hinaus tritt in den beanspruchten Temperaturbereichen selbst bei einer Lagerung der zweiten Teilmenge, d.h. des Produkts, kein oder kein wesentlicher oder nachweisbarer Pasteurierungseffekt auf. Hierdurch wird die Erzeugung von flüssigen Lebensmittel mit hoher Qualität und insbesondere hoher Frische ermöglicht.

Zudem kann wenigstens ein Teilvolumen des Wärmeträgers WT unter Einsatz von Primärenergie und/oder Nutzung von Wärme, vorzugsweise von bei der Herstellung des flüssigen Lebensmittels LM anfallenden Wärme, insbesondere von Wärme oder Abwärme eines Blockheizkraftwerks BHKW, erwärmt werden, vorzugsweise auf eine Temperatur von größer 100 °C.

Dies erlaubt einerseits, wenigstens ein Teilvolumen des Wärmeträgers auf ein besonders hohes Energieniveau, d.h. eine besonders hohe Temperatur zu bringen, wodurch sich die Vielfalt der Einsatzmöglichkeiten des Wärmeträgers erhöht. Darüber hinaus kann in dem erfindungsgemäßen Verfahren bzw. System anderweitig anfallende Abwärme, wie beispielsweise die Abwärme eines Blockheizkraftwerkes, sinnvoll und nutzbringend untergebracht werden.

Ferner kann im erfindungsgemäßen Verfahren wenigstens ein Teilvolumen des Wärmeträgers WT unter Einsatz von Primärenergie oder Abkälte und/oder mittels einer Absorptionskältemaschine AKM abgekühlt werden, vorzugsweise auf eine Temperatur von kleiner 4 °C, insbesondere kleiner 0 °C.

In analoger Weise zum zusätzlichen Erwärmen, erlaubt dieses zusätzliche Abkühlen, wenigstens ein Teilvolumen des Wärmeträgers auf ein besonders geringes Energieniveau, d.h. eine besonders geringe Temperatur, zu bringen, wodurch sich die Vielfalt der Einsatzmöglichkeiten des Wärmeträgers als Kälteträger erhöht. Darüber hinaus kann in dem erfindungsgemäßen Verfahren bzw. System anderweitig anfallende Abkälte sinnvoll und nutzbringend untergebracht werden.

In einer weiteren vorteilhaften Ausführungsform kann das erfindungsgemäße Verfahren ferner den Schritt aufweisen:
(h) Austreiben eines Kältemittels aus einem Lösungsmittel der Absorptionskältemaschine AKM mittels eines Teilvolumens des Wärmeträgers WT,
wobei das Teilvolumen des Wärmeträgers WT abgekühlt wird.

In einer weiteren vorteilhaften Ausführungsform kann das erfindungsgemäße Verfahren oder die Verwendung zudem wenigstens eines der nachfolgenden Merkmale aufweisen:
- die ersten Teilmenge LM1 ist eine erste Vorstufe eines Getränks;
- die zweite Teilmenge LM2 ist eine zweite, aus der ersten Vorstufe hergestellte Vorstufe des Getränks oder das abfüllfertige oder verkaufsfertige Getränk, vorzugsweise das abfüllfertige oder verkaufsfertige alkoholfreie Getränk;
- der Wärmeträger WT besteht vorzugsweise aus Wasser, einer Sole, CO₂, einem Alkohol, vorzugsweise Glykol, oder Ammoniak oder enthält einen dieser Stoffe;
- der erste Speicher SP1 ist ein Wärmespeicher, vorzugsweise ein Warmwasserspeicher, insbesondere ein Schichtenspeicher; und/oder
- der zweite Speicher SP2 ist ein Kältespeicher, vorzugsweise ein Kaltwasserspeicher oder Eiswasserspeicher, insbesondere ein Schichtenspeicher.

In einer weiteren vorteilhaften Ausführungsform kann das erfindungsgemäße Verfahren oder die Verwendung zudem wenigstens eines der nachfolgenden Merkmale aufweisen:
- die ersten Teilmenge LM1 ist eine Würze, vorzugsweise eine Ausschlagwürze, insbesondere eine Ausschlagwürze vor oder nach der Klärung;
- die zweite Teilmenge LM2 ist ein Bier oder Biermischgetränk, vorzugsweise ein filtriertes Bier oder Biermischgetränk, insbesondere ein abfüllfertiges oder verkaufsfertiges Bier, Drucktankbier, alkoholfreies Bier oder Biermischgetränk;
- der Wärmeträger WT besteht vorzugsweise aus Wasser, einer Sole, CO₂, einem Alkohol, vorzugsweise Glykol, oder Ammoniak oder enthält einen dieser Stoffe;
- der erste Speicher SP1 ist ein Wärmespeicher, vorzugsweise ein Warmwasserspeicher, insbesondere ein Schichtenspeicher; und/oder
- der zweite Speicher SP2 ist ein Kältespeicher, vorzugsweise ein Kaltwasserspeicher oder Eiswasserspeicher, insbesondere ein Schichtenspeicher.

Die vorstehend definierte Aufgabe wird in verwendungstechnischer Hinsicht durch die Verwendung mit den Merkmalen des Anspruchs 12 gelöst. Dabei gelten die Vorteile des erfindungsgemäßen Verfahrens für die erfindungsgemäße Verwendung analog.

So wird erfindungsgemäß das flüssige Lebensmittel LM in abfüllfertiger oder verkaufsfertiger Gestalt, vorzugsweise der zweiten Teilmenge LM2, zum Abkühlen eines Teilvolumens des Wärmeträgers WT, vorzugsweise des zweiten Teilvolumens WT2 des Wärmeträgers WT, in einem Verfahren nach einem der Ansprüche 1 bis 11 verwendet. Dabei wird das Teilvolumen oder ein weiteres Teilvolumen des Wärmeträgers WT, vorzugsweise das erste Teilvolumen WT1 des Wärmeträgers WT, zum Abkühlen einer Vorstufe des flüssigen Lebensmittels LM, vorzugsweise der ersten Teilmenge LM1, verwendet.

Bei der Getränkeherstellung und insbesondere in der Brauerei kann damit die im fertigen Getränk oder Bier gespeicherte Kälte vor dem Abfüllen in Gebinde rückgewonnen werden und zu Kühlzwecken, beispielsweise zum Kühlen heißer Würze oder einer anderen Getränkevorstufe, energiesparend verwendet werden.

Die vorstehend genannte Aufgabe wird ferner in vorrichtungstechnischer Hinsicht durch die Vorrichtung mit den Merkmalen des Anspruchs 13 gelöst. Dabei gelten die Vorteile des erfindungsgemäßen Verfahrens für die erfindungsgemäße Vorrichtung und seinen vorteilhaften Weiterbildungen analog.

Die erfindungsgemäße Vorrichtung zur Herstellung eines flüssigen Lebensmittels LM, zur Durchführung des erfindungsgemäßen Verfahrens wie vorstehend beschrieben, weist wenigstens auf:
- wenigstens einen ersten Wärmeüberträger WX1; WX3 zum ein- oder mehrstufigen Abkühlen der ersten Teilmenge LM1, welche eine Vorstufe eines flüssigen Lebensmittels LM ist, unter Erwärmen wenigstens eines Teilvolumens des Wärmeträgers WT, insbesondere des ersten Teilvolumens WT1 des Wärmeträgers WT oder des ersten Teilvolumens WT1 und des dritten Teilvolumens WT3 des Wärmeträgers WT;
- wenigstens einen zweiten Wärmeüberträger WX2; WX4 zum ein- oder mehrstufigen Erwärmen der zweiten Teilmenge LM2, welche das flüssige Lebensmittel LM in verkaufsfertiger Gestalt ist, unter Abkühlen wenigstens eines Teilvolumens des Wärmeträgers WT, insbesondere des zweiten Teilvolumens WT2 oder des zweiten Teilvolumens WT2 und des vierten Teilvolumens WT4;
- wenigstens einen ersten Speicher SP1 ; SP3, vorzugsweise wenigstens einen Wärmespeicher, vorzugsweise wenigstens einen Warmwasserspeicher, insbesondere wenigstens einen Schichtenspeicher, zum Einlagern und Entnehmen des Wärmeträgers WT;
   ▪ wobei der wenigstens eine erste Speicher SP1; SP3 ein Teilvolumen des Wärmeträgers WT enthält;
   ▪ wobei das Teilvolumen des Wärmeträgers WT in dem wenigstens einen ersten Speicher SP1; SP3 eine Temperatur im Bereich von 4 bis 130 °C, vorzugsweise 4 bis 120 °C, insbesondere 4 bis 97 °C, aufweist;
- wenigstens einen zweiten Speicher SP2; SP4, vorzugsweise wenigstens einen Kältespeicher, vorzugsweise einen Kaltwasserspeicher oder Eiswasserspeicher, insbesondere einen Schichtenspeicher, zum Einlagern und Entnehmen des Wärmeträgers WT;
   ▪ wobei der wenigstens eine zweite Speicher SP2; SP4 ein Teilvolumen des Wärmeträgers WT enthält;
   ▪ wobei das Teilvolumen des Wärmeträgers WT in dem wenigstens einen zweiten Speicher SP2; SP4 eine Temperatur im Bereich von -10 bis 8 °C, vorzugsweise -5 bis 8 °C, vorzugsweise -4 bis 6 °C, insbesondere -1 bis 6 °C, aufweist;
- wobei der wenigstens eine erste Speicher SP1; SP3 mit dem wenigstens einen ersten Wärmeüberträger WX1; WX3 und mit dem wenigstens einen zweiten Wärmeüberträger WX2; WX4 in Fluidverbindung steht; und
- wobei der wenigstens eine zweite Speicher SP2; SP4 mit dem wenigstens einen ersten Wärmeüberträger SP1; SP3 und mit dem wenigstens einen zweiten Wärmeüberträger WX2; WX4 in Fluidverbindung steht.

Vorteilhafte Weiterbildungen der erfindungsgemäßen Vorrichtung sind Gegenstand der abhängigen Vorrichtungsansprüche.

So kann der wenigstens eine erste Speicher SP1; SP3 und/oder der wenigstens eine zweite Speicher SP2; SP4 jeweils eine Mehrzahl von Einbring- und/oder Entnahmeöffnungen EO zum Einbringen und/oder Entnehmen eines Volumens des Wärmeträgers WT aufweisen. Insbesondere können die Einbring- und/oder Entnahmeöffnungen EO an unterschiedlichen Stellen in Bezug auf die Höhe des jeweiligen Speichers angeordnet sein.

Das Vorhandensein der beschriebenen Einbring- und/oder Entnahmeöffnungen EO und deren Anordnung in unterschiedlicher Höhe des jeweiligen Speichers erlaubt eine temperaturgerechte Einlagerung bzw. Entnahme des Wärmeträgers WT in bzw. aus dem jeweiligen Speicher.

Ferner können der wenigstens eine erste Speicher SP1; SP3 und/oder der wenigstens eine zweite Speicher SP2; SP4 Teile eines Gesamtspeichers, vorzugsweise eines Schichtenspeichers, sind.

Ein Gesamtspeicher stellte die konstruktiv einfachste und platzsparendste Realisierung des erfindungsgemäßen Speicherregimes dar.

Darüber hinaus kann die Vorrichtung ferner einen Heizkessel HK und/oder ein Blockheizkraftwerk BHKW zum Erwärmen wenigstens eines Teilvolumens des Wärmeträgers WT aufweisen. Dabei kann bzw. können der Heizkessel HK und/oder das Blockheizkraftwerk BHKW mit dem wenigstens einen ersten Speicher SP1; SP3 und/oder mit dem wenigstens einen zweiten Speicher SP2; SP4 in Fluidverbindung stehen oder bringbar sein.

Ferner kann die Vorrichtung einen Kältekompressor KK und/oder eine Absorptionskältemaschine AKM zum Abkühlen wenigstens eines Teilvolumens des Wärmeträgers WT aufweisen.

Dabei kann der Kältekompressor KK mit dem wenigstens einen ersten Speicher SP1; SP3 und/oder mit dem wenigstens einen zweiten Speicher SP2; SP4 in Fluidverbindung stehen oder bringbar sein.

Die Absorptionskältemaschine AKM kann einen Verdampfer VD aufweisen, der mit dem wenigstens einen ersten Speicher SP1; SP3 und/oder mit dem wenigstens einen zweiten Speicher SP2; SP4 in Fluidverbindung steht oder bringbar ist. Die Absorptionskältemaschine AKM kann ferner einen Rückkühler RK aufweisen, der mit dem wenigstens einen ersten Speicher SP1; SP3 und/oder mit dem wenigstens einen zweiten Speicher SP2; SP4 in Fluidverbindung steht oder bringbar ist. Schließlich kann die Absorptionskältemaschine AKM einen Austreiber AT aufweisen, der mit dem wenigstens einen ersten Speicher SP1; SP3 und/oder mit dem wenigstens einen zweiten Speicher SP2; SP4 in Fluidverbindung steht oder bringbar ist.

Diejenigen Merkmale, welche den erfindungsgemäßen Gegenständen zugeordnet und in den unabhängigen Ansprüchen genannt sind, stellen die obligatorischen bzw. wesentlichen Merkmale des jeweiligen Gegenstandes dar, sofern diese nicht anders gekennzeichnet sind. Alle übrigen in den abhängigen Ansprüchen und in dieser Beschreibung genannten, den erfindungsgemäßen Gegenständen zuordbaren Merkmale sind dagegen fakultativ für den jeweiligen Gegenstand und definieren vorteilhafte Ausführungsformen des jeweiligen Gegenstandes. Die fakultativen Merkmale, wie vorstehend definiert, können jeweils in beliebiger Weise mit allen in dieser Beschreibung dargestellten Gegenständen (Verfahren, Verwendung, Vorrichtung) kombiniert werden, soweit der Fachmann hierfür kein offensichtliches Hindernis sieht.

So lassen sich insbesondere alle für die in dieser Beschreibung angegebenen Merkmale des Verfahrens auch mit der in dieser Anmeldung beschriebenen Verwendung übertragen und verknüpfen. Analoges gilt für die mittels den beschriebenen Merkmalen erzielten Wirkungen und Vorteile.

### Beispiele

Die Erfindung wird nachfolgend in Ausführungsbeispielen anhand der Figuren der Zeichnung näher erläutert. Es zeigt:
- Fig. 1a: eine schematische Ansicht einer ersten Variante einer ersten beispielhaften Ausführungsform des erfindungsgemäßen Verfahrens bzw. der erfindungsgemäßen Vorrichtung;
- Fig. 1b: eine schematische Ansicht einer nicht-beanspruchten Ausführungsform des Verfahrens bzw. der Vorrichtung;
- Fig. 2: eine schematische Ansicht einer zweiten beispielhaften Ausführungsform des erfindungsgemäßen Verfahrens bzw. der erfindungsgemäßen Vorrichtung;
- Fig. 3: eine schematische Draufsicht einer dritten beispielhaften Ausführungsform des erfindungsgemäßen Verfahrens bzw. der erfindungsgemäßen Vorrichtung; und
- Fig. 4: eine schematische Draufsicht einer nicht-beanspruchten Ausführungsform des Verfahrens bzw. der Vorrichtung.

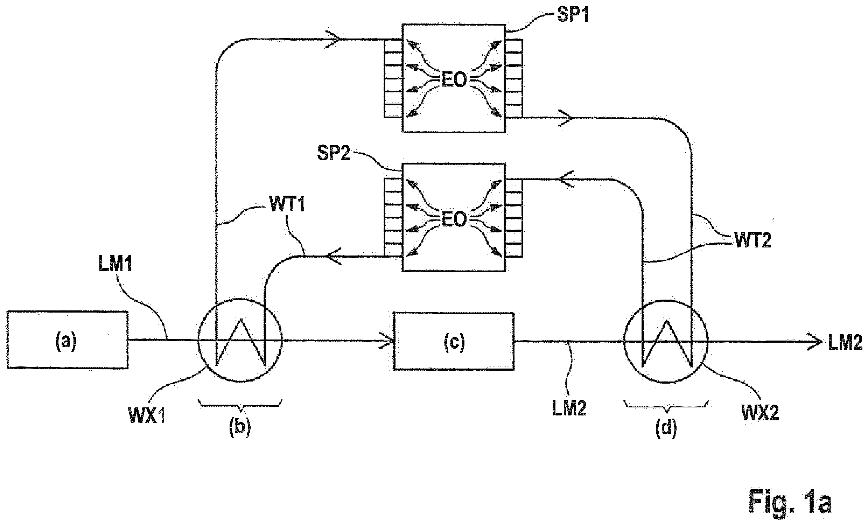

Gemäß der Darstellung der Fig. 1a weist eine erste Variante einer ersten, beispielhaften Ausführungsform des erfindungsgemäßen Verfahrens die Schritte (a) bis (d) auf. Dabei umfasst die erfindungsgemäße Vorrichtung dieser Ausführungsform einen ersten Wärmeüberträger WX1 zum einstufigen Abkühlen der ersten Teilmenge LM1, einen zweiten Wärmeüberträger WX2 zum einstufigen Erwärmen der zweiten Teilmenge LM2, einen ersten Speicher SP1 und einen zweiten Speicher SP2. Dabei weisen der erste Speicher SP1 und der zweite Speicher SP2 jeweils eine Mehrzahl von Einbring- und/oder Entnahmeöffnungen EO auf.

In Schritt (a) wird eine erste Teilmenge LM1, welche eine Vorstufe eines flüssigen Lebensmittels LM ist, hergestellt. Diese erste Teilmenge LM1 wird in Schritt (b) mittels eines ersten Teilvolumens WT1 des Wärmeträgers WT im Wärmeüberträger WX1 im Gegenstrom einstufig abgekühlt. Dabei wird das erste Teilvolumen WT1 erwärmt. Das erste Teilvolumen WT1 wird vor dem Erwärmen dem zweiten Speicher SP2 entnommen und nach dem Erwärmen in den ersten Speicher SP1 eingelagert.

In Schritt (c) wird die erste Teilmenge LM1 zu einer zweiten Teilmenge LM2, welche das flüssige Lebensmittel LM in abfüllfertiger oder verkaufsfertiger Gestalt ist, weiterverarbeitet.

Die resultierende zweite Teilmenge LM2 wird in Schritt (d) mittels eines zweiten Teilvolumens WT2 des Wärmeträgers WT im Wärmeüberträger WX2 im Gegenstrom einstufig auf eine Temperatur von höchstens 40 °C erwärmt. Dabei wird das zweite Teilvolumen WT2 abgekühlt. Das zweite Teilvolumen WT2 wird vor dem Abkühlen dem ersten Speicher SP1 entnommen und nach dem Abkühlen in den zweiten Speicher SP2 eingelagert.

In diesem Beispiel können die Temperaturen der einzelnen Medien so gewählt sein wie vorstehend zur Ausführungsform des erfindungsgemäßen Verfahrens mit einstufigem Abkühlen der ersten Teilmenge LM1 und einstufigem Erwärmen der zweiten Teilmenge LM2 angegeben.

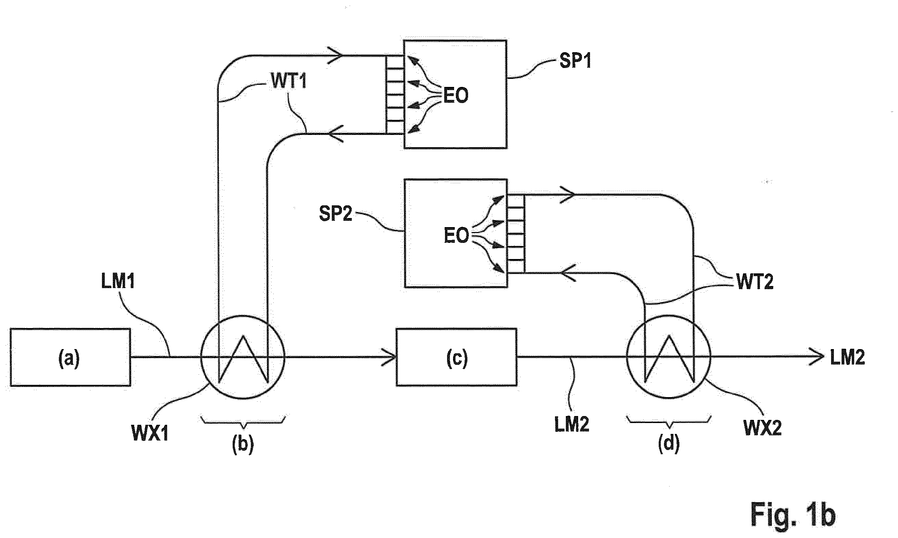

Gemäß der Darstellung der Fig. 1b weist eine nicht beanspruchte Ausführungsform des Verfahrens die Schritte (a) bis (d) auf. Dabei umfasst die Vorrichtung dieser Ausführungsform einen ersten Wärmeüberträger WX1 zum einstufigen Abkühlen der ersten Teilmenge LM1, einen zweiten Wärmeüberträger WX2 zum einstufigen Erwärmen der zweiten Teilmenge LM2, einen ersten Speicher SP1 und einen zweiten Speicher SP2. Dabei weisen der erste Speicher SP1 und der zweite Speicher SP2 jeweils eine Mehrzahl von Einbring- und/oder Entnahmeöffnungen EO auf.

In Schritt (a) wird eine erste Teilmenge LM1, welche eine Vorstufe eines flüssigen Lebensmittels LM ist, hergestellt. Diese erste Teilmenge LM1 wird in Schritt (b) mittels eines ersten Teilvolumens WT1 des Wärmeträgers WT im Wärmeüberträger WX1 im Gegenstrom einstufig abgekühlt. Dabei wird das erste Teilvolumen WT1 erwärmt. Das erste Teilvolumen WT1 wird vor dem Erwärmen dem ersten Speicher SP1 entnommen und nach dem Erwärmen in den ersten Speicher SP1 eingelagert.

In Schritt (c) wird die erste Teilmenge LM1 zu einer zweiten Teilmenge LM2, welche das flüssige Lebensmittel LM in abfüllfertiger oder verkaufsfertiger Gestalt ist, weiterverarbeitet.

Die resultierende zweite Teilmenge LM2 wird in Schritt (d) mittels eines zweiten Teilvolumens WT2 des Wärmeträgers WT im Wärmeüberträger WX2 im Gegenstrom einstufig auf eine Temperatur von höchstens 40 °C erwärmt. Dabei wird das zweite Teilvolumen WT2 abgekühlt. Das zweite Teilvolumen WT2 wird vor dem Abkühlen dem zweiten Speicher SP2 entnommen und nach dem Abkühlen in den zweiten Speicher SP2 eingelagert.

In diesem Beispiel können die Temperaturen der einzelnen Medien so gewählt sein wie vorstehend zur Ausführungsform des erfindungsgemäßen Verfahrens mit einstufigem Abkühlen der ersten Teilmenge LM1 und einstufigem Erwärmen der zweiten Teilmenge LM2 angegeben.

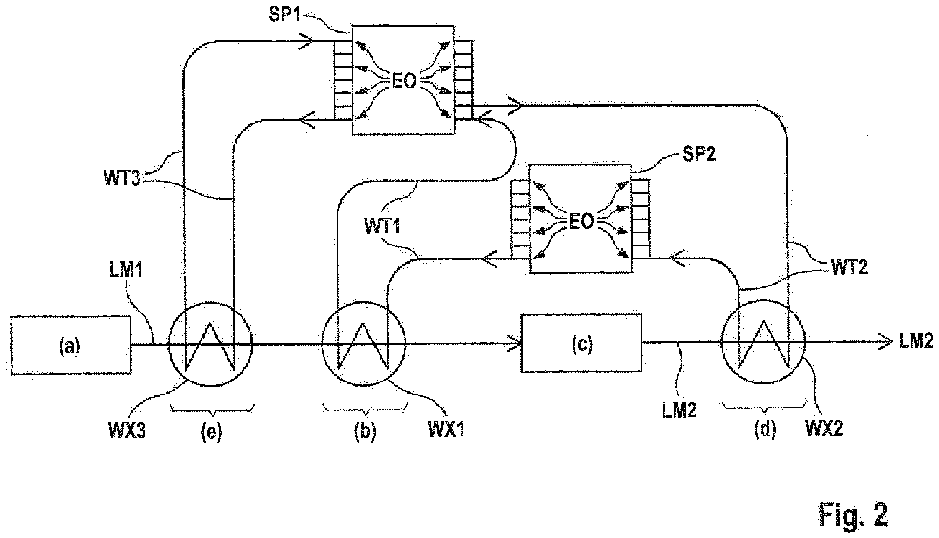

Gemäß der Darstellung der Fig. 2 weist eine zweite, beispielhafte Ausführungsform des erfindungsgemäßen Verfahrens die Schritte (a) bis (e) auf. Dabei umfasst die erfindungsgemäße Vorrichtung dieser Ausführungsform zwei erste Wärmeüberträger WX1; WX3 zum zweistufigen Abkühlen der ersten Teilmenge LM1, einen zweiten Wärmeüberträger WX2 zum einstufigen Erwärmen der zweiten Teilmenge LM2, einen ersten Speicher SP1, und einen zweiten Speicher SP2. Dabei weisen der erste Speicher SP1 und der zweite Speicher SP2 jeweils eine Mehrzahl von Einbring- und/oder Entnahmeöffnungen EO auf.

In Schritt (a) wird eine erste Teilmenge LM1, welche eine Vorstufe eines flüssigen Lebensmittels LM ist, hergestellt. Diese erste Teilmenge LM1 wird in einer ersten Stufe in Schritt (e) mittels eines dritten Teilvolumens WT3 des Wärmeträgers WT im Wärmeüberträger WX3 im Gegenstrom einstufig abgekühlt. Dabei wird das dritte Teilvolumen WT3 erwärmt. Das dritte Teilvolumen WT3 wird vor dem Erwärmen dem ersten Speicher SP1 entnommen und nach dem Erwärmen in den ersten Speicher SP1 eingelagert.

Diese erste Teilmenge LM1 wird in folgenden Schritt (b) in einer zweiten Stufe mittels eines ersten Teilvolumens WT1 des Wärmeträgers WT im Wärmeüberträger WX1 im Gegenstrom weiter abgekühlt. Dabei wird das erste Teilvolumen WT1 erwärmt. Das erste Teilvolumen WT1 wird vor dem Erwärmen dem zweiten Speicher SP2 entnommen und nach dem Erwärmen in den ersten Speicher SP1 eingelagert.

In Schritt (c) wird die erste Teilmenge LM1 zu einer zweiten Teilmenge LM2, welche das flüssige Lebensmittel LM in abfüllfertiger oder verkaufsfertiger Gestalt ist, weiterverarbeitet.

Die resultierende zweite Teilmenge LM2 wird in Schritt (d) mittels des zweiten Teilvolumens WT2 des Wärmeträgers WT im Wärmeüberträger WX2 im Gegenstrom einstufig auf eine Temperatur von höchstens 40 °C erwärmt. Dabei wird das zweite Teilvolumen WT2 abgekühlt. Das zweite Teilvolumen WT2 wird vor dem Abkühlen dem ersten Speicher SP1 entnommen und nach dem Abkühlen in den zweiten Speicher SP2 eingelagert.

In diesem Beispiel können die Temperaturen der einzelnen Medien so gewählt sein wie vorstehend zur Ausführungsform des erfindungsgemäßen Verfahrens mit zweistufigem Abkühlen der ersten Teilmenge LM1 und einstufigem Erwärmen der zweiten Teilmenge LM2 angegeben.

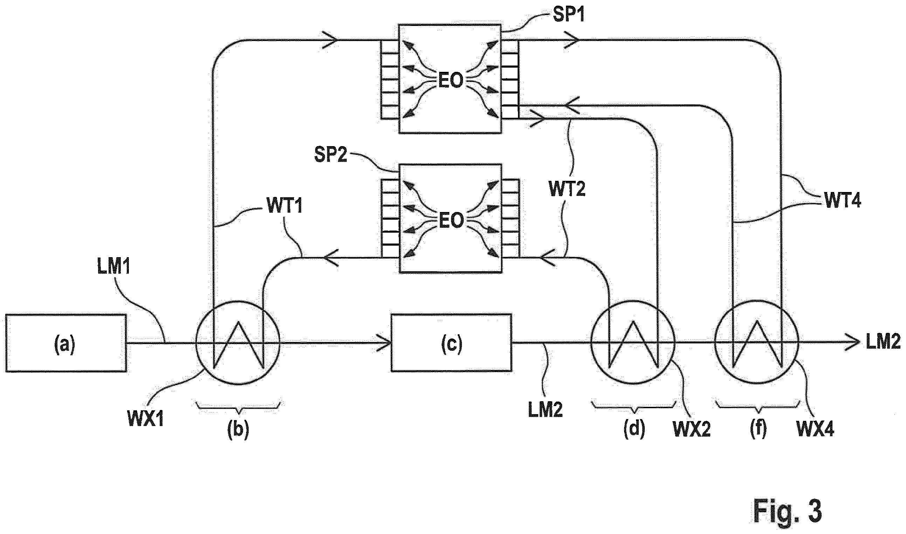

Gemäß der Darstellung der Fig. 3 weist eine dritte, beispielhafte Ausführungsform des erfindungsgemäßen Verfahrens die Schritte (a) bis (d) und (f) auf. Dabei umfasst die erfindungsgemäße Vorrichtung dieser Ausführungsform einen ersten Wärmeüberträger WX1 zum einstufigen Abkühlen der ersten Teilmenge LM1, zwei zweite Wärmeüberträger WX2; WX4 zum zweistufigen Erwärmen der zweiten Teilmenge LM2, einen ersten Speicher SP1 und einen zweiten Speicher SP2. Dabei weisen der erste Speicher SP1 und der zweite Speicher SP2 jeweils eine Mehrzahl von Einbring- und/oder Entnahmeöffnungen EO auf.

In Schritt (a) wird eine erste Teilmenge LM1, welche eine Vorstufe eines flüssigen Lebensmittels LM ist, hergestellt. Diese erste Teilmenge LM1 wird in Schritt (b) mittels eines ersten Teilvolumens WT1 des Wärmeträgers WT im Wärmeüberträger WX1 im Gegenstrom einstufig abgekühlt. Dabei wird das erste Teilvolumen WT1 erwärmt. Das erste Teilvolumen WT1 wird vor dem Erwärmen dem zweiten Speicher SP2 entnommen und nach dem Erwärmen in den ersten Speicher SP1 eingelagert.

In Schritt (c) wird die erste Teilmenge LM1 zu einer zweiten Teilmenge LM2, welche das flüssige Lebensmittel LM in abfüllfertiger oder verkaufsfertiger Gestalt ist, weiterverarbeitet.

Die resultierende zweite Teilmenge LM2 wird in einer ersten Stufe in Schritt (d) mittels eines zweiten Teilvolumens WT2 des Wärmeträgers WT im Wärmeüberträger WX2 im Gegenstrom erwärmt. Dabei wird das zweite Teilvolumen WT2 abgekühlt. Das zweite Teilvolumen WT2 wird vor dem Abkühlen dem ersten Speicher SP1 entnommen und nach dem Abkühlen in den zweiten Speicher SP2 eingelagert.

Diese vorgewärmte zweite Teilmenge LM2 wird in einer zweiten Stufe in Schritt (f) mittels eines vierten Teilvolumens WT4 des Wärmeträgers WT im Wärmeüberträger WX4 im Gegenstrom auf eine Temperatur von höchstens 40 °C weiter erwärmt. Dabei wird das vierte Teilvolumen WT4 abgekühlt. Das vierte Teilvolumen WT4 wird vor dem Abkühlen dem ersten Speicher SP1 entnommen und nach dem Abkühlen in den ersten Speicher SP1 eingelagert.

In diesem Beispiel können die Temperaturen der einzelnen Medien so gewählt sein wie vorstehend zur Ausführungsform des erfindungsgemäßen Verfahrens mit einstufigem Abkühlen der ersten Teilmenge LM1 und zweistufigem Erwärmen der zweiten Teilmenge LM2 angegeben.

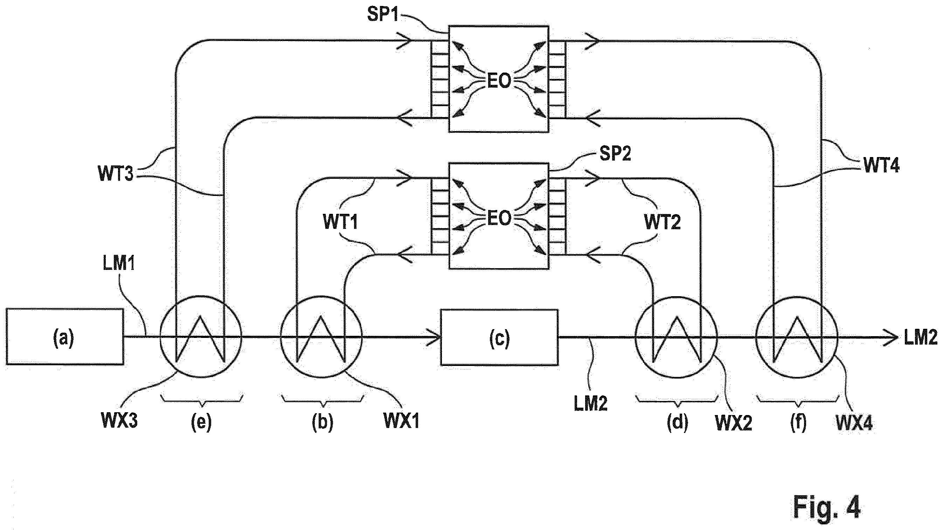

Gemäß der Darstellung der Fig. 4 weist eine nicht beanspruchte Ausführungsform des Verfahrens die Schritte (a) bis (f) auf. Dabei umfasst die Vorrichtung dieser Ausführungsform zwei erste Wärmeüberträger WX1; WX3 zum zweistufigen Abkühlen der ersten Teilmenge LM1, zwei zweite Wärmeüberträger WX2; WX4 zum zweistufigen Erwärmen der zweiten Teilmenge LM2, einen ersten Speicher SP1, und einen zweiten Speicher SP2. Dabei weisen der erste Speicher SP1 und der zweite Speicher SP2 jeweils eine Mehrzahl von Einbring- und/oder Entnahmeöffnungen EO auf.

In Schritt (a) wird eine erste Teilmenge LM1, welche eine Vorstufe eines flüssigen Lebensmittels LM ist, hergestellt. Diese erste Teilmenge LM1 wird in einer ersten Stufe in Schritt (e) mittels eines dritten Teilvolumens WT3 des Wärmeträgers WT im Wärmeüberträger WX3 im Gegenstrom abgekühlt. Dabei wird das dritte Teilvolumen WT3 erwärmt. Das dritte Teilvolumen WT3 wird vor dem Erwärmen dem ersten Speicher SP1 entnommen und nach dem Erwärmen in den ersten Speicher SP1 eingelagert.

Diese erste Teilmenge LM1 wird in folgenden Schritt (b) in einer zweiten Stufe mittels eines ersten Teilvolumens WT1 des Wärmeträgers WT im Wärmeüberträger WX1 im Gegenstrom weiter abgekühlt. Dabei wird das erste Teilvolumen WT1 erwärmt. Das erste Teilvolumen WT1 wird vor dem Erwärmen dem zweiten Speicher SP2 entnommen und nach dem Erwärmen in den zweiten Speicher SP2 eingelagert.

In Schritt (c) wird die erste Teilmenge LM1 zu einer zweiten Teilmenge LM2, welche das flüssige Lebensmittel LM in abfüllfertiger oder verkaufsfertiger Gestalt ist, weiterverarbeitet.

Die resultierende zweite Teilmenge LM2 wird im folgenden Schritt (d) in einer ersten Stufe mittels eines zweiten Teilvolumens WT2 des Wärmeträgers WT im Wärmeüberträger WX2 im Gegenstrom erwärmt. Dabei wird das zweite Teilvolumen WT2 abgekühlt. Das zweite Teilvolumen WT2 wird vor dem Abkühlen dem zweiten Speicher SP2 entnommen und nach dem Abkühlen in den zweiten Speicher SP2 eingelagert.

Diese vorgewärmte zweite Teilmenge LM2 wird dann in Schritt (f) in einer zweiten Stufe mittels eines vierten Teilvolumens WT4 des Wärmeträgers WT im Wärmeüberträger WX4 im Gegenstrom auf eine Temperatur von höchstens 40 °C weiter erwärmt. Dabei wird das vierte Teilvolumen WT4 abgekühlt. Das vierte Teilvolumen WT4 wird vor dem Abkühlen dem ersten Speicher SP1 entnommen und nach dem Abkühlen in den ersten Speicher SP1 eingelagert.

In diesem Beispiel können die Temperaturen der einzelnen Medien so gewählt sein wie vorstehend zur Ausführungsform des erfindungsgemäßen Verfahrens mit zweistufigem Abkühlen der ersten Teilmenge LM1 und zweistufigem Erwärmen der zweiten Teilmenge LM2 angegeben.

### Alternativen

Die hier beschriebene Erfindung ist nicht auf die vorstehend ausgeführten Ausführungsformen und Beispiele beschränkt, sondern umfasst auch alternative Ausgestaltungen.

Die Erfindung ist nicht auf das Vorhandensein einer ersten Teilmenge LM1 und einer zweiten Teilmenge LM2 beschränkt, sondern kann noch weitere Teilmengen des flüssigen Lebensmittels oder seiner Vorstufen berücksichtigen.

Die Erfindung ist nicht auf das Vorhandensein von bis zu vier Teilvolumina des Wärmeträgers beschränkt, sondern kann noch weitere Teilvolumina berücksichtigen.

Die Erfindung ist nicht auf die genannten Getränke als flüssige Lebensmittel beschränkt, sondern kann auch beispielsweise Softdrinks, Limonaden, Fruchtsäfte, Gemüsesäfte, Nektare, Alcopops, Getränke auf Milchbasis, Getränke auf Teebasis und Getränke auf Kaffeebasis umfassen.

Das erfindungsgemäße Verfahren ist nicht auf ein- oder zweistufige Abkühl- oder Erwärmschritte beschränkt, sondern kann auch drei- oder vierstufige Abkühl- oder Erwärmschritte vorsehen.

Die erfindungsgemäße Vorrichtung ist nicht auf einen oder zwei erste Wärmeüberträger WX1; WX3 und einen oder zwei zweite Wärmeüberträger WX2; WX4 beschränkt, sondern kann jeweils noch eine größere Anzahl von Wärmeüberträgern, insbesondere drei erste und/oder drei zweite Wärmeüberträger, vorsehen.

Ferner ist die erfindungsgemäße Vorrichtung nicht auf einen ersten Speicher SP1 und einen zweite Speicher SP2 beschränkt, sondern kann zusätzlich noch weitere erster und zweite Speicher, insbesondere eine weiteren ersten Speicher SP3 und/oder einen weiteren zweiten Speicher SP4, vorsehen.

Im Schritt (f) des vorstehend beschriebenen, erfindungsgemäßen Verfahrens kann das vierte Teilvolumen WT4 vor dem Abkühlen alternativ auch dem zweiten Speicher SP2 entnommen werden.

Die Übertragung der Wärme zwischen einer Teilmenge des flüssigen Lebensmittels oder einer Vorstufe desselben und einem Teilvolumen des Wärmeträgers in den Wärmeüberträgern ist nicht auf eine Wärmeübertragung im Gegenstrom beschränkt. Dieser Übertragung kann ordnungsgemäß auch im Gleichstrom oder im Querstrom erfolgen.

### Definitionen

Im Rahmen dieser Anmeldung wird unter dem Begriff "Wärmeträger" jeder in Verfahren zur Lebensmittelherstellung, vorzugsweise bei der Getränkeherstellung, insbesondere bei der Bierherstellung, verwendbare Stoff verstanden, welche geeignet ist, Wärme aufzunehmen und wieder abzugeben.

Vorzugsweise kann unter dem Begriff "Wärmeträger" jeder im technischen Gebiet der Anmeldung verwendbare Wärmeträger, Kälteträger oder jedes im technischen Gebiet der Anmeldung verwendbare Kältemittel verstanden werden. Dabei kann der erfindungsgemäße Wärmeträger ein im Wesentlichen reiner Stoff, oder ein Stoffgemisch, wie beispielsweise eine Lösung, eine Suspension, eine Emulsion oder ein Aerosol sein. Vorzugsweise schließt der Begriff "Wärmeträger" im Sinne der vorliegenden Anmeldung Ammoniak und Kohlenwasserstoffe, vorzugsweise halogenierte Kohlenwasserstoffe, insbesondere Fluor-Kohlenwasserstoffe und Fluorchlor-Kohlenwasserstoffe, und gegebenenfalls ähnliche Substanzen aus.

Insbesondere kann unter dem Begriff "Wärmeträger" ein Wärmeträger auf Basis von Wasser, beispielsweise wasserhaltige Fluide, vorzugsweise Wasser, beispielsweise ein Rohwasser, ein Brauwasser, ein Brauchwasser, ein Grundwasser, ein Quellwasser, ein Brunnenwasser oder ein Oberflächenwasser oder ein metastabiles Wasser; eine wässerige Lösung, wie beispielsweise eine Salzlösung oder eine Glykollösung; oder eine wässerige Suspension, wie beispielsweise ein Binäreis, verstanden werden.

Erfindungsgemäß wird unter einem "Teilvolumen" jeder von null und von der Gesamtmenge verschiedene Anteil an einem Gesamtvolumen oder Gesamtheit verstanden. Dabei kann der Anteil auch als prozentualer Anteil an einer Gesamtmenge im Bereich von größer null bis kleiner 100 % definiert werden. In dieser Anmeldung bezieht sich der Begriff "Teilvolumen" auf einen Wärmeträger.

Analog wird erfindungsgemäß unter einer "Teilmenge" jeder von null und von der Gesamtmenge verschiedene Anteil an einer Gesamtmenge oder Gesamtheit verstanden. Dabei kann der Anteil auch als prozentualer Anteil an einer Gesamtmenge im Bereich von größer null bis kleiner 100 % definiert werden. In dieser Anmeldung bezieht sich der Begriff "Teilmenge" auf ein flüssiges Lebensmittel in abfüllfertiger oder verkaufsfertiger Gestalt oder auf eine beliebige Vorstufe des flüssigen Lebensmittels.

Erfindungsgemäß bedeutet der Begriff "verkaufsfertig" die Eignung zur Abgabe an den Endverbraucher.

Erfindungsgemäß umfasst der Begriff "Wärmeüberträger" eine Maschine oder einen Apparat, die bzw. der zum Übertragen von Wärme von einer Teilmenge wie vorstehend definiert auf einen Wärmeträger wie vorstehend definiert und umgekehrt geeignet und im technischen Gebiet der Erfindung einsetzbar ist. Beispielsweise kann der Wärmeüberträger sein: Plattenwärmeüberträger, Röhrenwärmeüberträger, Spiralwärme-überträger, U-Rohr-Wärmeüberträger, Rohrbündelwärmeüberträger, Mantelrohrwärme-überträger und/oder an Behälterwänden und/oder Behälteroberflächen angeordnete Kühltaschen oder dergleichen, insbesondere Würzekühler oder dergleichen.

In Bezug auf die erfindungsgemäß beschriebenen Verfahren, Vorrichtungen und Verwendungen sind die zur Verwirklichung dieser erfindungsgemäßen Gegenstände erforderlichen weiteren Einrichtungen, insbesondere Rohrleitungen, Pumpen, Ventile, Steuer- und Regelsysteme, Stromversorgung, Sensor- und Messeinrichtungen und dergleichen sowie Hilfs- und Betriebsstoffe dem Fachmann bekannt und werden in der vorliegenden Beschreibung aus Gründen der Übersichtlichkeit nicht näher beschrieben.

Unter dem Begriff "alkoholfrei" wird in Bezug auf ein Lebensmittel, Getränk oder Bier oder ein sonstiges in dieser Anmeldung beanspruchtes Erzeugnis erfindungsgemäß ein Gehalt an Ethanol im Erzeugnis von 0 bis weniger als 1,2 Volumen-%, vorzugsweise von 0 bis weniger als 1,0 Volumen-%, vorzugsweise von 0 bis weniger als 0,5 Volumen-%, vorzugsweise von 0 bis weniger als 0,3 Volumen-%, vorzugsweise von 0 bis weniger als 0,1 Volumen-%, insbesondere etwa 0 Volumen-%, verstanden.

So weit in dieser Anmeldung nicht ausdrücklich definiert, wird den in dieser Anmeldung verwendeten Begriffen die für den Fachmann im technischen Gebiet der Anmeldung, nämlich der Lebensmittelherstellung, vorzugsweise der Getränkeherstellung, insbesondere der Bierbereitung, üblichen Definition zugeordnet.

Die einzelnen, in dieser Anmeldung genannten Zahlenwerte, insbesondere die Temperaturangaben, können jeweils als exakter Zahlenwert wie angegeben verstanden werden. Die Offenbarung dieser Anmeldung schließt jedoch auch mit ein, dass beliebige einzelne oder alle angegebenen Zahlenwerte, insbesondere die Temperaturangaben, jeweils den angegebenen Wert einschließlich einer relativen Abweichung davon von höchstens 10%, vorzugsweise höchstens 5 %, vorzugsweise höchstens 3 %, vorzugsweise höchstens 1 %, insbesondere höchstens 0,1 %, nach oben und/oder unten umfassen. Bei Temperaturen kann der Bezugswert zur Bestimmung der relativen Abweichung der angegebene Zahlenwert der Temperatur in der Celsiusskala oder der dieser Temperatur entsprechende Zahlenwert in der Kelvinskala (absolute Temperatur) sein, sofern die absolute Temperatur nach Umrechnung der angegebenen Celsiuswerte zugrunde gelegt wird, was ebenfalls von der Offenbarung der Erfindung umfasst ist.

Beispiel: Bei einer Abweichung von 10 % und einer Temperatur von 100 °C kann die offenbarte Temperatur alle Temperaturen im Bereich von (100 ± 10) °C = 90 bis 110 °C einschließen. Alternativ kann dieselbe Offenbarung einschließen: 100 °C ± 10 % = 373,16 K ± 10 %. Die Offenbarung von 100 °C kann bei einer Abweichung von 10 % folglich alternativ einen Bereich von 335,84 bis 410,48 K einschließen.

## Patentansprüche

1. Verfahren zur Herstellung eines flüssigen Lebensmittels, wenigstens mit den Schritten:
(a) Herstellen einer ersten Teilmenge (LM1), welche eine Vorstufe eines flüssigen Lebensmittels (LM) ist;
(b) Abkühlen der ersten Teilmenge (LM1) mittels eines ersten Teilvolumens (WT1) eines Wärmeträgers (WT);
wobei das erste Teilvolumen (WT1) erwärmt wird;
wobei das erste Teilvolumen (WT1) vor dem Erwärmen einem zweiten Speicher (SP2) entnommen wird; und
wobei das erste Teilvolumen (WT1) nach dem Erwärmen in einen ersten Speicher (SP1) eingelagert wird;
(c) Weiterverarbeiten der ersten Teilmenge (LM1) zu einer zweiten Teilmenge (LM2), welche das flüssige Lebensmittel (LM) in abfüllfertiger oder verkaufsfertiger Gestalt ist;
(d) Erwärmen der zweiten Teilmenge (LM2) mittels eines zweiten Teilvolumens (WT2) des Wärmeträgers (WT) auf eine Temperatur von höchstens 40 °C;
wobei das zweite Teilvolumen (WT2) abgekühlt wird;
wobei das zweite Teilvolumen (WT2) vor dem Abkühlen dem ersten Speicher (SP1) entnommen wird; und
wobei das zweite Teilvolumen (WT2) nach dem Abkühlen in den zweiten Speicher (SP2) eingelagert wird;
(g) nach Schritt (d), Abfüllen der zweiten Teilmenge (LM2) mit einer Temperatur im Bereich von 4 bis 40 °C in Behälter, vorzugsweise verkaufsfertige Gebinde.

2. Verfahren nach Anspruch 1, **dadurch gekennzeichnet, dass** das flüssige Lebensmittel (LM) ein Getränk, vorzugsweise ein nichtalkoholisches Getränk, ein Bier oder ein Biermischgetränk, ist.

3. Verfahren nach Anspruch 1 oder 2, ferner mit dem Schritt:
(e) vor Schritt (b) Abkühlen der ersten Teilmenge (LM1) mittels eines dritten Teilvolumens (WT3) des Wärmeträgers (WT);
wobei das dritte Teilvolumen (WT3) erwärmt wird;
wobei das dritte Teilvolumen (WT3) vor dem Erwärmen dem ersten Speicher (SP1) entnommen wird; und
wobei das dritte Teilvolumen (WT3) nach dem Erwärmen in den ersten Speicher (SP1) eingelagert wird.

4. Verfahren nach einem der Ansprüche 1 bis 3, ferner mit dem Schritt:
(f) nach Schritt (d) Erwärmen der zweiten Teilmenge (LM2) mittels eines vierten Teilvolumens (WT4) des Wärmeträgers (WT), vorzugsweise auf eine Temperatur von höchstens 40 °C, vorzugsweise höchstens 30 °C, vorzugsweise höchstens 20 °C, insbesondere höchstens 16 °C;
wobei das vierte Teilvolumen (WT4) abgekühlt wird;
wobei das vierte Teilvolumen (WT4) vor dem Abkühlen dem ersten Speicher (SP1) entnommen wird; und
wobei das vierte Teilvolumen (WT4) nach dem Abkühlen in den ersten Speicher (SP1) eingelagert wird.

5. Verfahren nach Anspruch 1 oder 2, ferner mit den Schritten:
(e) vor Schritt (b) Abkühlen der ersten Teilmenge (LM1) mittels des dritten Teilvolumens (WT3);
wobei das dritte Teilvolumen (WT3) erwärmt wird;
wobei das dritte Teilvolumen (WT3) vor dem Erwärmen dem ersten Speicher (SP1) entnommen wird; und
wobei das dritte Teilvolumen (WT3) nach dem Erwärmen in den ersten Speicher (SP1) eingelagert wird;
(f) nach Schritt (d) Erwärmen der zweiten Teilmenge (LM2) mittels des vierten Teilvolumens (WT4);
wobei das vierte Teilvolumen (WT4) abgekühlt wird;
wobei das vierte Teilvolumen (WT4) vor dem Abkühlen dem ersten Speicher (SP1) entnommen wird; und
wobei das vierte Teilvolumen (WT4) nach dem Abkühlen in den ersten Speicher (SP1) eingelagert wird.

6. Verfahren nach Anspruch 1 oder 2, **dadurch gekennzeichnet, dass**:
in Schritt (b) die erste Teilmenge (LM1) vor dem Abkühlen eine Temperatur im Bereich von 80 bis 105 °C, vorzugsweise 80 bis 99 °C, aufweist;
in Schritt (b) die erste Teilmenge (LM1) nach dem Abkühlen eine Temperatur im Bereich von 6 bis 22 °C, vorzugsweise 6 bis 14 °C, insbesondere 7 bis 12 °C, aufweist;
in Schritt (b) das erste Teilvolumen (WT1) vor dem Erwärmen eine Temperatur im Bereich von -10 bis 8 °C, vorzugsweise -6 bis 5 °C, insbesondere 0 bis 5 °C, aufweist;
in Schritt (b) das erste Teilvolumen (WT1) nach dem Erwärmen eine Temperatur im Bereich von 90 bis 100 °C, vorzugsweise 93 bis 97 °C, aufweist;
in Schritt (d) die zweite Teilmenge (LM2) vor dem Erwärmen eine Temperatur im Bereich von -5 bis 8 °C, vorzugsweise -2 bis 4 °C, insbesondere -1 bis 2 °C, aufweist;
in Schritt (d) die zweite Teilmenge (LM2) nach dem Erwärmen eine Temperatur im Bereich von 4 bis 30 °C, vorzugsweise 4 bis 20 °C, insbesondere 8 bis 16 °C, aufweist;
in Schritt (d) das zweite Teilvolumen (WT2) vor dem Abkühlen eine Temperatur im Bereich von 12 bis 97 °C, vorzugsweise 12 bis 20 °C, aufweist; und
in Schritt (d) das zweite Teilvolumen (WT2) nach dem Abkühlen eine Temperatur im Bereich von -4 bis 4 °C, vorzugsweise -1 bis 4 °C, insbesondere 0 bis 4 °C, aufweist.

7. Verfahren nach Anspruch 3, **dadurch gekennzeichnet, dass**:
in Schritt (b) die erste Teilmenge (LM1) vor dem Abkühlen eine Temperatur im Bereich von 10 bis 30 °C, vorzugsweise 15 bis 23 °C, aufweist;
in Schritt (b) die erste Teilmenge (LM1) nach dem Abkühlen eine Temperatur im Bereich von 6 bis 22 °C, vorzugsweise 6 bis 14 °C, insbesondere 7 bis 12 °C, aufweist;
in Schritt (b) das erste Teilvolumen (WT1) vor dem Erwärmen eine Temperatur im Bereich von -10 bis 8 °C, vorzugsweise -6 bis 5 °C, insbesondere 0 bis 5 °C, aufweist;
in Schritt (b) das erste Teilvolumen (WT1) nach dem Erwärmen eine Temperatur im Bereich von 12 bis 20 °C, vorzugsweise 16 bis 20 °C aufweist;
in Schritt (d) die zweite Teilmenge (LM2) vor dem Erwärmen eine Temperatur im Bereich von -5 bis 8 °C, vorzugsweise -2 bis 4 °C, insbesondere -1 bis 2 °C, aufweist;
in Schritt (d) die zweite Teilmenge (LM2) nach dem Erwärmen eine Temperatur im Bereich von 4 bis 30 °C, vorzugsweise 4 bis 20 °C, insbesondere 8 bis 16 °C, aufweist;
in Schritt (d) das zweite Teilvolumen (WT2) vor dem Abkühlen eine Temperatur im Bereich von 12 bis 97 °C, vorzugsweise 12 bis 20 °C, aufweist;
in Schritt (d) das zweite Teilvolumen (WT2) nach dem Abkühlen eine Temperatur im Bereich von -4 bis 4 °C, vorzugsweise -1 bis 4 °C, insbesondere 0 bis 4 °C, aufweist;
in Schritt (e) die erste Teilmenge (LM1) vor dem Abkühlen eine Temperatur im Bereich von 80 bis 105 °C, vorzugsweise 80 bis 99 °C, aufweist;
in Schritt (e) die erste Teilmenge (LM1) nach dem Abkühlen eine Temperatur im Bereich von 10 bis 30 °C, vorzugsweise 15 bis 23 °C, aufweist;
in Schritt (e) das dritte Teilvolumen (WT3) vor dem Erwärmen eine Temperatur im Bereich von 12 bis 97 °C, vorzugsweise 12 bis 20 °C, aufweist; und
in Schritt (e) das dritte Teilvolumen (WT3) nach dem Erwärmen eine Temperatur im Bereich von 90 bis 100 °C, vorzugsweise 93 bis 97 °C, aufweist.

8. Verfahren nach Anspruch 4, **dadurch gekennzeichnet, dass**:
in Schritt (b) die erste Teilmenge (LM1) vor dem Abkühlen eine Temperatur im Bereich von 80 bis 105 °C, vorzugsweise 80 bis 99 °C, aufweist;
in Schritt (b) die erste Teilmenge (LM1) nach dem Abkühlen eine Temperatur im Bereich von 6 bis 22 °C, vorzugsweise 6 bis 14 °C, insbesondere 7 bis 12 °C, aufweist;
in Schritt (b) das erste Teilvolumen (WT1) vor dem Erwärmen eine Temperatur im Bereich von -10 bis 8 °C, vorzugsweise -6 bis 5 °C, insbesondere 0 bis 5 °C, aufweist;
in Schritt (b) das erste Teilvolumen (WT1) nach dem Erwärmen eine Temperatur im Bereich von 90 bis 100 °C, vorzugsweise 93 bis 97 °C, aufweist;
in Schritt (d) die zweite Teilmenge (LM2) vor dem Erwärmen eine Temperatur im Bereich von -5 bis 8 °C, vorzugsweise -2 bis 4 °C, insbesondere -1 bis 2 °C, aufweist;
in Schritt (d) die zweite Teilmenge (LM2) nach dem Erwärmen eine Temperatur im Bereich von 1 bis 6 °C, vorzugsweise 2 bis 4 °C, aufweist;
in Schritt (d) das zweite Teilvolumen (WT2) vor dem Abkühlen eine Temperatur im Bereich von 12 bis 97 °C, vorzugsweise 12 bis 20 °C, aufweist;
in Schritt (d) das zweite Teilvolumen (WT2) nach dem Abkühlen eine Temperatur im Bereich von -4 bis 4 °C, vorzugsweise -1 bis 4 °C, insbesondere 0 bis 4 °C, aufweist;
in Schritt (f) die zweite Teilmenge (LM2) vor dem Erwärmen eine Temperatur im Bereich von 1 bis 6 °C, vorzugsweise 2 bis 4 °C, aufweist;
in Schritt (f) die zweite Teilmenge (LM2) nach dem Erwärmen eine Temperatur im Bereich von 4 bis 30 °C, vorzugsweise 4 bis 20 °C, vorzugsweise 6 bis 20 °C, insbesondere 8 bis 16 °C, aufweist;
in Schritt (f) das vierte Teilvolumen (WT4) vor dem Abkühlen eine Temperatur im Bereich von 12 bis 97 °C, vorzugsweise 12 bis 20 °C, aufweist; und
in Schritt (f) das vierte Teilvolumen (WT4) nach dem Abkühlen eine Temperatur im Bereich von 4 bis 10 °C, vorzugsweise 6 bis 8 °C, aufweist.

9. Verfahren nach Anspruch 5, **dadurch gekennzeichnet, dass**:
in Schritt (b) die erste Teilmenge (LM1) vor dem Abkühlen eine Temperatur im Bereich von 10 bis 30 °C, vorzugsweise 15 bis 23 °C, aufweist;
in Schritt (b) die erste Teilmenge (LM1) nach dem Abkühlen eine Temperatur im Bereich von 6 bis 22 °C, vorzugsweise 6 bis 14 °C, insbesondere 7 bis 12 °C, aufweist;
in Schritt (b) das erste Teilvolumen (WT1) vor dem Erwärmen eine Temperatur im Bereich von -10 bis 8 °C, vorzugsweise -6 bis 5 °C, insbesondere 0 bis 5 °C, aufweist;
in Schritt (b) das erste Teilvolumen (WT1) nach dem Erwärmen eine Temperatur im Bereich von 12 bis 20 °C aufweist;
in Schritt (d) die zweite Teilmenge (LM2) vor dem Erwärmen eine Temperatur im Bereich von -5 bis 8 °C, vorzugsweise -2 bis 4 °C, insbesondere -1 bis 2 °C, aufweist;
in Schritt (d) die zweite Teilmenge (LM2) nach dem Erwärmen eine Temperatur im Bereich von 1 bis 6 °C, vorzugsweise 2 bis 4 °C, aufweist;
in Schritt (d) das zweite Teilvolumen (WT2) vor dem Abkühlen eine Temperatur im Bereich von 12 bis 97 °C, vorzugsweise 12 bis 20 °C, aufweist;
in Schritt (d) das zweite Teilvolumen (WT2) nach dem Abkühlen eine Temperatur im Bereich von -4 bis 4 °C, vorzugsweise -1 bis 4 °C, insbesondere 0 bis 4 °C, aufweist;
in Schritt (e) die erste Teilmenge (LM1) vor dem Abkühlen eine Temperatur im Bereich von 80 bis 105 °C, vorzugsweise 80 bis 99 °C, aufweist;
in Schritt (e) die erste Teilmenge (LM1) nach dem Abkühlen eine Temperatur im Bereich von 10 bis 30 °C, vorzugsweise 15 bis 23 °C, aufweist;
in Schritt (e) das dritten Teilvolumen (WT3) vor dem Erwärmen eine Temperatur im Bereich von 12 bis 97 °C, vorzugsweise 12 bis 20 °C, aufweist;
in Schritt (e) das dritten Teilvolumen (WT3) nach dem Erwärmen eine Temperatur im Bereich von 90 bis 100 °C, vorzugsweise 93 bis 97 °C, aufweist;
in Schritt (f) die zweite Teilmenge (LM2) vor dem Erwärmen eine Temperatur im Bereich von 1 bis 6 °C, vorzugsweise 2 bis 4 °C, aufweist;
in Schritt (f) die zweite Teilmenge (LM2) nach dem Erwärmen eine Temperatur im Bereich von 4 bis 30 °C, vorzugsweise 4 bis 20 °C, vorzugsweise 6 bis 20 °C, insbesondere 8 bis 16 °C, aufweist;
in Schritt (f) das vierte Teilvolumen (WT4) vor dem Abkühlen eine Temperatur im Bereich von 12 bis 97 °C, vorzugsweise 12 bis 20 °C, aufweist; und
in Schritt (f) das vierte Teilvolumen (WT4) nach dem Abkühlen eine Temperatur im Bereich von 4 bis 10 °C, vorzugsweise 6 bis 8 °C, aufweist.

10. Verfahren nach einem der Ansprüche 1 bis 9, **dadurch gekennzeichnet, dass** zwischen dem Schritt (d) und dem Schritt (g) ein Erwärmen der zweiten Teilmenge (LM2) auf eine Temperatur mehr als 40 °C, vorzugsweise mehr als 30 °C, vorzugsweise mehr als 20 °C, insbesondere mehr als 16 °C, unterbleibt.

11. Verfahren nach einem der Ansprüche 1 bis 10, **dadurch gekennzeichnet, dass** wenigstens ein Teilvolumen des Wärmeträgers (WT) unter Einsatz von Primärenergie und/oder Nutzung von Wärme, vorzugsweise von bei der Herstellung des flüssigen Lebensmittels (LM) anfallenden Wärme, insbesondere von Wärme oder Abwärme eines Blockheizkraftwerks (BHKW), erwärmt wird, vorzugsweise auf eine Temperatur von größer 100 °C.

12. Verwendung des flüssigen Lebensmittels (LM) in abfüllfertiger oder verkaufsfertiger Gestalt zum Abkühlen eines Teilvolumens des Wärmeträgers (WT) in einem Verfahren nach einem der Ansprüche 1 bis 11;
wobei das Teilvolumen oder ein weiteres Teilvolumen des Wärmeträgers (WT) zum Abkühlen einer Vorstufe des flüssigen Lebensmittels (LM) verwendet wird.

13. Vorrichtung zur Herstellung eines flüssigen Lebensmittels (LM), zur Durchführung des Verfahrens nach einem der Ansprüche 1 bis 11, wenigstens aufweisend:
wenigstens einen ersten Wärmeüberträger (WX1; WX3) zum ein- oder mehrstufigen Abkühlen der ersten Teilmenge (LM1), welche eine Vorstufe eines flüssigen Lebensmittels (LM) ist, unter Erwärmen wenigstens eines Teilvolumens des Wärmeträgers (WT), insbesondere des ersten Teilvolumens (WT1) des Wärmeträgers (WT) oder des ersten Teilvolumens (WT1) und des dritten Teilvolumens (WT3) des Wärmeträgers (WT);
wenigstens einen zweiten Wärmeüberträger (WX2; WX4) zum ein- oder mehrstufigen Erwärmen der zweiten Teilmenge (LM2), welche das flüssige Lebensmittel (LM) in verkaufsfertiger Gestalt ist, unter Abkühlen wenigstens eines Teilvolumens des Wärmeträgers (WT), insbesondere des zweiten Teilvolumens (WT2) oder des zweiten Teilvolumens (WT2) und des vierten Teilvolumens (WT4);
wenigstens einen ersten Speicher (SP1; SP3), vorzugsweise wenigstens einen Wärmespeicher, vorzugsweise wenigstens einen Warmwasserspeicher, insbesondere wenigstens einen Schichtenspeicher, zum Einlagern und Entnehmen des Wärmeträgers (WT);
wobei der wenigstens eine erste Speicher (SP1; SP3) ein Teilvolumen des Wärmeträgers (WT) enthält;
wobei das Teilvolumen des Wärmeträgers (WT) in dem wenigstens einen ersten Speicher (SP1; SP3) eine Temperatur im Bereich von 4 bis 130 °C aufweist;
wenigstens einen zweiten Speicher (SP2; SP4), vorzugsweise wenigstens einen Kältespeicher, vorzugsweise einen Kaltwasserspeicher oder Eiswasserspeicher, insbesondere einen Schichtenspeicher, zum Einlagern und Entnehmen des Wärmeträgers (WT);
wobei der wenigstens eine zweite Speicher (SP2; SP4) ein Teilvolumen des Wärmeträgers (WT) enthält;
wobei das Teilvolumen des Wärmeträgers (WT) in dem wenigstens einen zweiten Speicher (SP2; SP4) eine Temperatur im Bereich von -10 bis 8 °C aufweist;
wobei der wenigstens eine erste Speicher (SP1; SP3) mit dem wenigstens einen ersten Wärmeüberträger (WX1; WX3) und mit dem wenigstens einen zweiten Wärmeüberträger (WX2; WX4) in Fluidverbindung steht; und
wobei der wenigstens eine zweite Speicher (SP2; SP4) mit dem wenigstens einen ersten Wärmeüberträger (WX1; WX3) und mit dem wenigstens einen zweiten Wärmeüberträger (WX2; WX4) in Fluidverbindung steht.

14. Vorrichtung nach Anspruch 13, **dadurch gekennzeichnet, dass** der wenigstens eine erste Speicher (SP1; SP3) und/oder der wenigstens eine zweite Speicher (SP2; SP4) jeweils eine Mehrzahl von Einbring- und/oder Entnahmeöffnungen (EO) zum Einbringen und/oder Entnehmen eines Volumens des Wärmeträgers (WT) aufweisen;
wobei die Einbring- und/oder Entnahmeöffnungen (EO) vorzugsweise an unterschiedlichen Stellen in Bezug auf die Höhe des jeweiligen Speichers angeordnet sind.

15. Vorrichtung nach Anspruch 13 oder 14, **dadurch gekennzeichnet, dass** der wenigstens eine erste Speicher (SP1; SP3) und/oder der wenigstens eine zweite Speicher (SP2; SP4) Teile eines Gesamtspeichers, vorzugsweise eines Schichtenspeichers, sind.

## Claims

1. Method for producing a liquid foodstuff with at least the steps:
(a) Producing a first partial quantity (LM1) that is a precursor of a liquid foodstuff (LM);
(b) Cooling the first partial quantity (LM1) by means of a first partial volume (WT1) of a heat transfer medium (WT);
wherein the first partial volume (WT1) is heated;
wherein the first partial volume (WT1) is withdrawn from a second storage facility (SP2) prior to the heating; and
wherein the first partial volume (WT1) is stored in a first storage facility (SP1) after the heating;
(c) Further processing the first partial quantity (LM1) into a second partial quantity (LM2) that is the liquid foodstuff (LM) in a ready-to-fill or ready-for-sale form;
(d) heating the second partial quantity (LM2) by means of a second partial volume (WT2) of the heat transfer medium (WT) to a temperature of at most 40 °C;
wherein the second partial volume (WT2) is cooled;
wherein the second partial volume (WT2) is withdrawn from the first storage facility (SP1) prior to the cooling; and
wherein the second partial volume (WT2) is stored in the-second storage facility (SP2) after the cooling;
(g) After step (d), filling the second partial quantity (LM2) with a temperature in the range 4 to 40 °C in receptacles, preferably ready-for-sale containers.

2. Method according to claim 1, **characterised in that** the liquid foodstuff (LM) is a beverage, preferably a non-alcoholic beverage, a beer or a beer mix beverage.

3. Method according to claim 1 or 2 with the additional step:
(e) before step (b) cooling the first partial quantity (LM1) by means of a third partial volume (WT3) of the heat transfer medium (WT);
wherein the third partial volume (WT3) is heated;
wherein the third partial volume (WT3) is withdrawn from the first storage facility (SP1) prior to the heating; and
wherein the third partial volume (WT3) is stored in the first storage facility (SP1) after the heating.

4. Method according to one of claims 1 to 3 with the additional step:
(f) after step (d) heating the second partial quantity (LM2) by means of a fourth partial volume (WT4) of the heat transfer medium (WT), preferably to a temperature of 40 °C at most, preferably 30 °C at most, preferably 20 °C at most, in particular 16 °C at most;
wherein the fourth partial volume (WT4) is cooled;
wherein the fourth partial volume (WT4) is withdrawn from the first storage facility (SP1); and wherein the fourth partial volume (WT4) is stored in the first storage facility (SP1) after the cooling;

5. Method according to claim 1 or 2 with the additional steps:
(e) before step (b) cooling the first partial quantity (LM1) by means of the third partial volume (WT3);
wherein the third partial volume (WT3) is heated;
wherein the third partial volume (WT3) is withdrawn from the first storage facility (SP1) prior to the heating; and
wherein the third partial volume (WT3) is stored in the first storage facility (SP1) after the heating;
(f) after step (d) heating the second partial quantity (LM2) by means of the fourth partial volume (WT4);
wherein the fourth partial volume (WT4) is cooled;
wherein the fourth partial volume (WT4) is withdrawn from the first storage facility (SP1) before cooling; and wherein the fourth partial volume (WT4) is stored in the first storage facility (SP1) after the cooling.

6. Method according to claim 1 or 2, **characterised in that**:
In step (b) the temperature of the first partial quantity (LM1) before cooling is in the range of 80 to 105 °C, preferably 80 to 99 °C;
In step (b) the temperature of the first partial quantity (LM1) after cooling is in the range of 6 to 22 °C, preferably 6 to 14 °C, in particular 7 to 12 °C;
In step (b) the temperature of the first partial volume (WT1) before heating is in the range of -10 to 8 °C, preferably -6 to 5 °C, in particular 0 to 5 °C;
In step (b) the temperature of the first partial volume (WT1) after heating is in the range of 90 to 100 °C, preferably 93 to 97 °C;
In step (d) the temperature of the second partial quantity (LM2) before heating is in the range of-5 to 8 °C, preferably -2 to 4 °C, in particular -1 to 2 °C;
In step (d) the temperature of the second partial quantity (LM2) after heating is in the range of 4 to 30 °C, preferably 4 to 20 °C, in particular 8 to 16 °C;
In step (d) the temperature of the second partial volume (WT2) before cooling is in the range of 12 to 97 °C, preferably 12 to 20 °C; and
In step (d) the temperature of the second partial volume (WT2) after cooling is in the range of -4 to 4 °C, preferably -1 to 4 °C, in particular 0 to 4 °C.

7. Method according to claim 3, **characterised in that**:
In step (b) the temperature of the first partial quantity (LM1) before cooling is in the range of 10 to 30 °C, preferably 15 to 23 °C;
In step (b) the temperature of the first partial quantity (LM1) after cooling is in the range of 6 to 22 °C, preferably 6 to 14 °C, in particular 7 to 12 °C;
In step (b) the temperature of the first partial volume (WT1) before heating is in the range of -10 to 8 °C, preferably -6 to 5 °C, in particular 0 to 5 °C;
In step (b) the temperature of the first partial volume (WT1) after heating is in the range of 12 to 20 °C, preferably 16 to 20 °C;
In step (d) the temperature of the second partial quantity (LM2) before heating is in the range of-5 to 8 °C, preferably -2 to 4 °C, in particular -1 to 2 °C;
In step (d) the temperature of the second partial quantity (LM2) after heating is in the range of 4 to 30 °C, preferably 4 to 20 °C, in particular 8 to 16 °C;
In step (d) the temperature of the second partial volume (WT2) before cooling is in the range of 12 to 97 °C, preferably 12 to 20 °C;
In step (d) the temperature of the second partial volume (WT2) after cooling is in the range of -4 to 4 °C, preferably -1 to 4 °C, in particular 0 to 4 °C;
In step (e) the temperature of the first partial quantity (LM1) before cooling is in the range of 80 to 105 °C, preferably 80 to 99 °C;
In step (e) the temperature of the first partial quantity (LM1) after cooling is in the range of 10 to 30 °C, preferably 15 to 23 °C;
In step (e) the temperature of the third partial volume (WT3) before heating is in the range of 12 to 97 °C, preferably 12 to 20 °C; and
In step (e) the temperature of the third partial volume (WT3) after heating is in the range of 90 to 100 °C, preferably 93 to 97 °C.

8. Method according to claim 4, **characterised in that**
In step (b) the temperature of the first partial quantity (LM1) before cooling is in the range of 80 to 105 °C, preferably 80 to 99 °C;
In step (b) the temperature of the first partial quantity (LM1) after cooling is in the range of 6 to 22 °C, preferably 6 to 14 °C, in particular 7 to 12 °C;
In step (b) the temperature of the first partial volume (WT1) before heating is in the range of -10 to 8 °C, preferably -6 to 5 °C, in particular 0 to 5 °C;
In step (b) the temperature of the first partial volume (WT1) after heating is in the range of 90 to 100 °C, preferably 93 to 97 °C;
In step (d) the temperature of the second partial quantity (LM2) before heating is in the range of-5 to 8 °C, preferably -2 to 4 °C, in particular -1 to 2 °C;
In step (d) the temperature of the second partial quantity (LM2) after heating is in the range of 1 to 6 °C, preferably 2 to 4 °C;
In step (d) the temperature of the second partial volume (WT2) before cooling is in the range of 12 to 97 °C, preferably 12 to 20 °C;
In step (d) the temperature of the second partial volume (WT2) after cooling is in the range of -4 to 4 °C, preferably -1 to 4 °C, in particular 0 to 4 °C;
In step (f) the temperature of the second partial quantity (LM2) before heating is in the range of 1 to 6 °C, preferably 2 to 4 °C;
In step (f) the temperature of the second partial quantity (LM2) after heating is in the range of 4 to 30 °C, preferably 4 to 20 °C, preferably 6 to 20 °C, in particular 8 to 16 °C;
In step (f) the temperature of the fourth partial volume (WT4) before cooling is in the range of 12 to 97 °C, preferably 12 to 20 °C; and
In step (f) the temperature of the fourth partial volume (WT4) after cooling is in the range of 4 to 10 °C, preferably 6 to 8 °C.

9. Method according to claim 5, **characterised in that**:
In step (b) the temperature of the first partial quantity (LM1) before cooling is in the range of 10 to 30 °C, preferably 15 to 23 °C;
In step (b) the temperature of the first partial quantity (LM1) after cooling is in the range of 6 to 22 °C, preferably 6 to 14 °C, in particular 7 to 12 °C;
In step (b) the temperature of the first partial volume (WT1) before heating is in the range of -10 to 8 °C, preferably -6 to 5 °C, in particular 0 to 5 °C;
In step (b) the temperature of the first partial volume (WT1) after heating is in the range of 12 to 20 °C;
In step (d) the temperature of the second partial quantity (LM2) before heating is in the range of-5 to 8 °C, preferably -2 to 4 °C, in particular -1 to 2 °C;
In step (d) the temperature of the second partial quantity (LM2) after heating is in the range of 1 to 6 °C, preferably 2 to 4 °C;
In step (d) the temperature of the second partial volume (WT2) before cooling is in the range of 12 to 97 °C, preferably 12 to 20 °C;
In step (d) the temperature of the second partial volume (WT2) after cooling is in the range of -4 to 4 °C, preferably -1 to 4 °C, in particular 0 to 4 °C;
In step (e) the temperature of the first partial quantity (LM1) before cooling is in the range of 80 to 105 °C, preferably 80 to 99 °C;
In step (e) the temperature of the first partial quantity (LM1) after cooling is in the range of 10 to 30 °C, preferably 15 to 23 °C;
In step (e) the temperature of the third partial volume (WT3) before heating is in the range of 12 to 97 °C, preferably 12 to 20 °C;
In step (e) the temperature of the third partial volume (WT3) after heating is in the range of 90 to 100 °C, preferably 93 to 97 °C;
In step (f) the temperature of the second partial quantity (LM2) before heating is in the range of 1 to 6 °C, preferably 2 to 4 °C;
In step (f) the temperature of the second partial quantity (LM2) after heating is in the range of 4 to 30 °C, preferably 4 to 20 °C, preferably 6 to 20 °C, in particular 8 to 16 °C;
In step (f) the temperature of the fourth partial volume (WT4) before cooling is in the range of 12 to 97 °C, preferably 12 to 20 °C; and
In step (f) the temperature of the fourth partial volume (WT4) after cooling is in the range of 4 to 10 °C, preferably 6 to 8 °C.

10. Method according to one of claims 1 to 9, **characterised in that** a heating of the second partial quantity (LM2) to a temperature of more than 40 °C, preferably more than 30 °C, in particular more than 16 °C, does not occur between the step (d) and the step (g).

11. Method according to one of claims 1 to 10, **characterised in that** at least one partial volume of the heat transfer agent (WT) is heated, preferably to a temperature above 100 °C, by using primary energy and/or by exploiting the heat, preferably the heat resulting from the production of the liquid foodstuff (LM), in particular the heat or waste heat from a co-generation plant (CHP).

12. Use of the liquid foodstuff (LM) in a ready-to-fill or ready-for-sale form for cooling a partial volume of the heat transfer medium (WT) in a method according to one of claims 1 to 11; wherein the partial volume or an additional partial volume of the heat transfer medium (WT) is used to cool a precursor of the liquid foodstuff (LM).

13. Device for producing a liquid foodstuff (LM), in order to carry out the method according to one of claims 1 to 11, said device having at least:
at least one first heat exchanger (WX1; WX3) for single or multistep cooling of the first partial quantity (LM1) that is a precursor of a liquid foodstuff (LM), by heating at least a partial volume of the heat transfer medium (WT), in particular the first partial volume (WT1) of the heat transfer medium (WT) or the first partial volume (WT1) and the third partial volume (WT3) of the heat transfer medium (WT);
at least one second heat exchanger (WX2; WX4) for single or multistep heating of the second partial quantity (LM2) that is the liquid foodstuff (LM) in ready-for-sale form, by cooling at least a partial volume of the heat transfer medium (WT), in particular the second partial volume (WT2) or the second partial volume (WT2) and the fourth partial volume (WT4);
at least one first storage facility (SP1; SP3), preferably at least one heat accumulator, preferably a warm water storage facility, in particular at least one stratified storage unit, for storing and withdrawing the heat transfer medium (WT);
wherein the at least one first storage facility (SP1; SP3) contains a partial volume of the heat transfer medium (WT);
wherein the temperature of the partial volume of the heat transfer medium (WT) in the at least one first storage facility (SP1; SP3) is in the range 4 to 130 °C;
at least one second storage facility (SP2; SP4), preferably at least one cold accumulator, preferably a cold water storage facility or ice water storage facility, in particular a stratified storage unit, for storing and withdrawing the heat transfer medium (WT);
wherein the at least one second storage facility (SP2; SP4) contains a partial volume of the heat transfer medium (WT);
wherein the temperature of the partial volume of the heat transfer medium (WT) in the at least one second storage facility (SP2; SP4) is in the range -10 to 8 °C;
wherein the at least one first storage facility (SP1; SP3) is in fluid communication with the at least one first heat exchanger (WX1; WX3) and with the at least one second heat exchanger (WX2; WX4); and
wherein the at least one second storage facility (SP2; SP4) is in fluid communication with the at least one first heat exchanger (WX1; WX3) and with the at least one second heat exchanger (WX2; WX4).

14. Device according to claim 13, **characterised in that** the at least one first storage facility (SP1; SP3) and/or the at least one second storage facility (SP2; SP4) each possess a plurality of inlet and/or outlet openings (EO) for feeding and/or withdrawing a volume of the heat transfer medium (WT);
wherein the inlet and/or outlet openings (EO) are preferably disposed at different positions with respect to the height of the respective storage facility.

15. Device according to claim 13 or 14, **characterised in that** the at least one first storage facility (SP1; SP3) and/or the at least one second storage facility (SP2; SP4) are part of a total storage facility, preferably of a stratified storage unit.

## Revendications

1. Procédé de fabrication d'un produit alimentaire liquide, au moins avec les étapes consistant à :
(a) fabriquer une première quantité partielle (LM1), qui est une ébauche d'un produit alimentaire liquide (LM) ;
(b) refroidir la première quantité partielle (LM1) au moyen d'un premier volume partiel (WT1) d'un agent caloporteur (WT) ;
dans lequel le premier volume partiel (WT1) est chauffé ;
dans lequel le premier volume partiel (WT1) est extrait avant le chauffage d'un second réservoir (SP2) ; et
dans lequel le premier volume partiel (WT1) est stocké après le chauffage dans un premier réservoir (SP1) ;
(c) transformer la première quantité partielle (LM1) en une seconde quantité partielle (LM2), qui est le produit alimentaire liquide (LM) sous une forme prête au transvasement ou prête à la vente ;
(d) chauffer la seconde quantité partielle (LM2) au moyen d'un deuxième volume partiel (WT2) de l'agent caloporteur (WT) à une température maximale de 40 °C ;
dans lequel le deuxième volume partiel (WT2) est refroidi ;
dans lequel le deuxième volume partiel (WT2) est extrait avant le refroidissement du premier réservoir (SP1) ; et
dans lequel le deuxième volume partiel (WT2) est stocké après le refroidissement dans le second réservoir (SP2) ;
(g) après l'étape (d), transvaser la seconde quantité partielle (LM2) à une température située dans la plage allant de 4 à 40 °C dans des récipients, de préférence des emballages prêts à la vente.

2. Procédé selon la revendication 1, **caractérisé en ce que** le produit alimentaire liquide (LM) est une boisson, de préférence une boisson non alcoolisée, une bière ou une boisson mixte contenant de la bière.

3. Procédé selon la revendication 1 ou 2, comprenant en outre l'étape consistant à :
(e) avant l'étape (b), refroidir la première quantité partielle (LM1) au moyen d'un troisième volume partiel (WT3) de l'agent caloporteur (WT) ;
dans lequel le troisième volume partiel (WT3) est chauffé ;
dans lequel le troisième volume partiel (WT3) est extrait avant le chauffage du premier réservoir (SP1) ; et
dans lequel le troisième volume partiel (WT3) est stocké après le chauffage dans le premier réservoir (SP1).

4. Procédé selon l'une quelconque des revendications 1 à 3, comprenant en outre l'étape consistant à :
(f) après l'étape (d), chauffer la seconde quantité partielle (LM2) au moyen d'un quatrième volume partiel (WT4) de l'agent caloporteur (WT), de préférence à une température maximale de 40 °C, de préférence maximale de 30 °C, de préférence maximale de 20 °C, en particulier maximale de 16 °C ;
dans lequel le quatrième volume partiel (WT4) est refroidi ;
dans lequel le quatrième volume partiel (WT4) est extrait avant le refroidissement du premier réservoir (SP1) ; et
dans lequel le quatrième volume partiel (WT4) est stocké après le refroidissement dans le premier réservoir (SP1).

5. Procédé selon la revendication 1 ou 2, comprenant en outre les étapes consistant à :
(e) avant l'étape (b), refroidir la première quantité partielle (LM1) au moyen du troisième volume partiel (WT3) ;
dans lequel le troisième volume partiel (WT3) est chauffé ;
dans lequel le troisième volume partiel (WT3) est extrait avant le chauffage du premier réservoir (SP1) ; et
dans lequel le troisième volume partiel (WT3) est stocké après le chauffage dans le premier réservoir (SP1) ;
(f) après l'étape (d), chauffer la seconde quantité partielle (LM2) au moyen du quatrième volume partiel (WT4) ;
dans lequel le quatrième volume partiel (WT4) est refroidi ;
dans lequel le quatrième volume partiel (WT4) est extrait avant le refroidissement du premier réservoir (SP1) ; et
dans lequel le quatrième volume partiel (WT4) est stocké après le refroidissement dans le premier réservoir (SP1).

6. Procédé selon la revendication 1 ou 2, **caractérisé en ce que** :
à l'étape (b), la première quantité partielle (LM1) présente avant le refroidissement une température située dans la plage allant de 80 à 105 °C, de préférence de 80 à 99 °C ;
à l'étape (b), la première quantité partielle (LM1) présente après le refroidissement une température située dans la plage allant de 6 à 22 °C, de préférence de 6 à 14 °C, en particulier de 7 à 12 °C ;
à l'étape (b), le premier volume partiel (WT1) présente avant le chauffage une température située dans la plage allant de -10 à 8 °C, de préférence de -6 à 5 °C, en particulier de 0 à 5 °C ;
à l'étape (b), le premier volume partiel (WT1) présente après le chauffage une température située dans la plage allant de 90 à 100 °C, de préférence de 93 à 97 °C ;
à l'étape (d), la seconde quantité partielle (LM2) présente avant le chauffage une température située dans la plage allant de -5 à 8 °C, de préférence de -2 à 4 °C, en particulier de -1 à 2 °C ;
à l'étape (d), la seconde quantité partielle (LM2) présente après le chauffage une température située dans la plage allant de 4 à 30 °C, de préférence de 4 à 20 °C, en particulier de 8 à 16 °C ;
à l'étape (d), le deuxième volume partiel (WT2) présente avant le refroidissement une température située dans la plage allant de 12 à 97 °C, de préférence de 12 à 20 °C ; et
à l'étape (d), le deuxième volume partiel (WT2) présente après le refroidissement une température située dans la plage allant de -4 à 4 °C, de préférence de -1 à 4 °C, en particulier de 0 à 4 °C.

7. Procédé selon la revendication 3, **caractérisé en ce que** :
à l'étape (b), la première quantité partielle (LM1) présente avant le refroidissement une température située dans la plage allant de 10 à 30 °C, de préférence de 15 à 23 °C ;
à l'étape (b), la première quantité partielle (LM1) présente après le refroidissement une température située dans la plage allant de 6 à 22 °C, de préférence de 6 à 14 °C, en particulier de 7 à 12 °C ;
à l'étape (b), le premier volume partiel (WT1) présente avant le chauffage une température située dans la plage allant de -10 à 8 °C, de préférence de -6 à 5 °C, en particulier de 0 à 5 °C ;
à l'étape (b), le premier volume partiel (WT1) présente après le chauffage une température située dans la plage allant de 12 à 20 °C, de préférence de 16 à 20 °C ;
à l'étape (d), la seconde quantité partielle (LM2) présente avant le chauffage une température située dans la plage allant de -5 à 8 °C, de préférence de -2 à 4 °C, en particulier de -1 à 2 °C ;
à l'étape (d), la seconde quantité partielle (LM2) présente après le chauffage une température située dans la plage allant de 4 à 30 °C, de préférence de 4 à 20 °C, en particulier de 8 à 16 °C ;
à l'étape (d), le deuxième volume partiel (WT2) présente avant le refroidissement une température située dans la plage allant de 12 à 97 °C, de préférence de 12 à 20 °C ;
à l'étape (d), le deuxième volume partiel (WT2) présente après le refroidissement une température située dans la plage allant de -4 à 4 °C, de préférence de -1 à 4 °C, en particulier de 0 à 4 °C ;
à l'étape (e), la première quantité partielle (LM1) présente avant le refroidissement une température située dans la plage allant de 80 à 105 °C, de préférence de 80 à 99 °C ;
à l'étape (e), la première quantité partielle (LM1) présente après le refroidissement une température située dans la plage de 10 à 30 °C, de préférence de 15 à 23 °C ;
à l'étape (e), le troisième volume partiel (WT3) présente avant le chauffage une température située dans la plage allant de 12 à 97 °C, de préférence de 12 à 20 °C ; et
à l'étape (e), le troisième volume partiel (WT3) présente après le chauffage une température située dans la plage allant de 90 à 100 °C, de préférence de 93 à 97 °C.

8. Procédé selon la revendication 4, **caractérisé en ce que** :
à l'étape (b), la première quantité partielle (LM1) présente avant le refroidissement une température située dans la plage allant de 80 à 105 °C, de préférence de 80 à 99 °C ;
à l'étape (b), la première quantité partielle (LM1) présente après le refroidissement une température située dans la plage allant de 6 à 22 °C, de préférence de 6 à 14 °C, en particulier de 7 à 12 °C ;
à l'étape (b), le premier volume partiel (WT1) présente avant le chauffage une température située dans la plage allant de -10 à 8 °C, de préférence de -6 à 5 °C, en particulier de 0 à 5 °C ;
à l'étape (b), le premier volume partiel (WT1) présente après le chauffage une température située dans la plage allant de 90 à 100 °C, de préférence de 93 à 97 °C ;
à l'étape (d), la seconde quantité partielle (LM2) présente avant le chauffage une température située dans la plage allant de -5 à 8 °C, de préférence de -2 à 4 °C, en particulier de -1 à 2 °C ;
à l'étape (d), la seconde quantité partielle (LM2) présente après le chauffage une température située dans la plage allant de 1 à 6 °C, de préférence de 2 à 4 °C ;
à l'étape (d), le deuxième volume partiel (WT2) présente avant le refroidissement une température située dans la plage allant de 12 à 97 °C, de préférence de 12 à 20 °C ;
à l'étape (d), le deuxième volume partiel (WT2) présente après le refroidissement une température située dans la plage allant de -4 à 4 °C, de préférence de -1 à 4 °C, en particulier de 0 à 4 °C ;
à l'étape (f), la seconde quantité partielle (LM2) présente avant le chauffage une température située dans la plage allant de 1 à 6 °C, de préférence de 2 à 4 °C ;
à l'étape (f), la seconde quantité partielle (LM2) présente après le chauffage une température située dans la plage allant de 4 à 30 °C, de préférence de 4 à 20 °C, de préférence de 6 à 20 °C, en particulier de 8 à 16 °C ;
à l'étape (f), le quatrième volume partiel (WT4) présente avant le refroidissement une température située dans la plage allant de 12 à 97 °C, de préférence de 12 à 20 °C ; et
à l'étape (f), le quatrième volume partiel (WT4) présente après le refroidissement une température située dans la plage allant de 4 à 10 °C, de préférence de 6 à 8 °C.

9. Procédé selon la revendication 5, **caractérisé en ce que** :
à l'étape (b), la première quantité partielle (LM1) présente avant le refroidissement une température située dans la plage allant de 10 à 30 °C, de préférence de 15 à 23 °C ;
à l'étape (b), la première quantité partielle (LM1) présente après le refroidissement une température située dans la plage allant de 6 à 22 °C, de préférence de 6 à 14 °C, en particulier de 7 à 12 °C ;
à l'étape (b), le premier volume partiel (WT1) présente avant le chauffage une température située dans la plage allant de -10 à 8 °C, de préférence de -6 à 5 °C, en particulier de 0 à 5 °C ;
à l'étape (b), le premier volume partiel (WT1) présente après le chauffage une température située dans la plage allant de 12 à 20 °C ;
à l'étape (d), la seconde quantité partielle (LM2) présente avant le chauffage une température située dans la plage allant de -5 à 8 °C, de préférence de -2 à 4 °C, en particulier de -1 à 2 °C ;
à l'étape (d), la seconde quantité partielle (LM2) présente après le chauffage une température située dans la plage allant de 1 à 6 °C, de préférence de 2 à 4 °C ;
à l'étape (d), le deuxième volume partiel (WT2) présente avant le refroidissement une température située dans la plage allant de 12 à 97 °C, de préférence de 12 à 20 °C ;
à l'étape (d), le deuxième volume partiel (WT2) présente après le refroidissement une température située dans la plage allant de -4 à 4 °C, de préférence de -1 à 4 °C, en particulier de 0 à 4 °C ;
à l'étape (e), la première quantité partielle (LM1) présente avant le refroidissement une température située dans la plage allant de 80 à 105 °C, de préférence de 80 à 99 °C ;
à l'étape (e), la première quantité partielle (LM1) présente après le refroidissement une température située dans la plage allant de 10 à 30 °C, de préférence de 15 à 23 °C ;
à l'étape (e), le troisième volume partiel (WT3) présente avant le chauffage une température située dans la plage allant de 12 à 97 °C, de préférence de 12 à 20 °C ;
à l'étape (e), le troisième volume partiel (WT3) présente après le chauffage une température située dans la plage allant de 90 à 100 °C, de préférence de 93 à 97 °C ;
à l'étape (f), la seconde quantité partielle (LM2) présente avant le chauffage une température située dans la plage allant de 1 à 6 °C, de préférence de 2 à 4 °C ;
à l'étape (f), la seconde quantité partielle (LM2) présente après le chauffage une température située dans la plage allant de 4 à 30 °C, de préférence de 4 à 20 °C, de préférence de 6 à 20 °C, en particulier de 8 à 16 °C ;
à l'étape (f), le quatrième volume partiel (WT4) présente avant le refroidissement une température située dans la plage allant de 12 à 97 °C, de préférence de 12 à 20 °C ; et
à l'étape (f), le quatrième volume partiel (WT4) présente après le refroidissement une température située dans la plage allant de 4 à 10 °C, de préférence de 6 à 8 °C.

10. Procédé selon l'une quelconque des revendications 1 à 9, **caractérisé en ce que**, entre l'étape (d) et l'étape (g), on évite un chauffage de la seconde quantité partielle (LM2) à une température supérieure à 40 °C, de préférence supérieure à 30 °C, de préférence supérieure à 20 °C, en particulier supérieure à 16 °C.

11. Procédé selon l'une quelconque des revendications 1 à 10, **caractérisé en ce qu'**au moins un volume partiel de l'agent caloporteur (WT) est chauffé en utilisant de l'énergie primaire et/ou en utilisant de la chaleur, de préférence par de la chaleur résultant de la fabrication du produit alimentaire liquide (LM), en particulier de la chaleur ou de la chaleur perdue d'une centrale de cogénération (BHKW), de préférence à une température supérieure à 100 °C.

12. Utilisation du produit alimentaire liquide (LM) sous une forme prête au transvasement ou prête à la vente pour refroidir un volume partiel de l'agent caloporteur (WT) dans un procédé selon l'une quelconque des revendications 1 à 11 ;
dans laquelle le volume partiel ou un autre volume partiel de l'agent caloporteur (WT) est utilisé pour le refroidissement d'une ébauche du produit alimentaire liquide (LM).

13. Dispositif de fabrication d'un produit alimentaire liquide (LM) pour réaliser le procédé selon l'une quelconque des revendications 1 à 11, présentant au moins :
au moins un premier agent caloporteur (WX1 ; WX3) pour refroidir en une ou plusieurs étapes la première quantité partielle (LM1), qui est une ébauche d'un produit alimentaire liquide (LM), par chauffage d'au moins un volume partiel de l'agent caloporteur (WT), en particulier du premier volume partiel (WT1) de l'agent caloporteur (WT) ou du premier volume partiel (WT1) et du troisième volume partiel (WT3) de l'agent caloporteur (WT) ;
au moins un second agent caloporteur (WX2 ; WX4) pour chauffer en une ou plusieurs étapes la seconde quantité partielle (LM2), qui est le produit alimentaire liquide (LM) sous une forme prête à la vente, par refroidissement d'au moins un volume partiel de l'agent caloporteur (WT), en particulier du deuxième volume partiel (WT2) ou du deuxième volume partiel (WT2) et du quatrième volume partiel (WT4) ;
au moins un premier réservoir (SP1 ; SP3), de préférence au moins un accumulateur de chaleur, de préférence au moins un réservoir d'eau chaude, en particulier au moins un ballon à stratification pour stocker et extraire l'agent caloporteur (WT) ;
dans lequel l'au moins un premier réservoir (SP1 ; SP3) contient un volume partiel de l'agent caloporteur (WT) ;
dans lequel le volume partiel de l'agent caloporteur (WT) présente dans l'au moins un premier réservoir (SP1 ; SP3) une température située dans la plage allant de 4 à 130 °C ;
au moins un second réservoir (SP2 ; SP4), de préférence au moins un accumulateur de froid, de préférence un réservoir d'eau froide ou un réservoir d'eau glacée, en particulier un ballon à stratification, pour stocker et extraire l'agent caloporteur (WT) ;
dans lequel l'au moins un second réservoir (SP2 ; SP4) contient un volume partiel de l'agent caloporteur (WT) ;
dans lequel le volume partiel de l'agent caloporteur (WT) présente dans l'au moins un second réservoir (SP2 ; SP4) une température située dans la plage allant de -10 à 8 °C ;
dans lequel l'au moins un premier réservoir (SP1 ; SP3) est en communication fluidique avec l'au moins un premier agent caloporteur (WX1 ; WX3) et avec l'au moins un second agent caloporteur (WX2 ; WX4) ; et
dans lequel l'au moins un second réservoir (SP2 ; SP4) est en communication fluidique avec l'au moins un premier agent caloporteur (WX1 ; WX3) et avec l'au moins un second agent caloporteur (WX2 ; WX4).

14. Dispositif selon la revendication 13, **caractérisé en ce que** l'au moins un premier réservoir (SP1; SP3) et/ou l'au moins un second réservoir (SP2; SP4) présentent respectivement une pluralité d'ouvertures d'introduction et/ou d'extraction (EO) pour introduire et/ou extraire un volume de l'agent caloporteur (WT) ;
dans lequel les ouvertures d'introduction et/ou d'extraction (EO) sont disposées de préférence à différents emplacements par rapport à la hauteur du réservoir respectif.

15. Dispositif selon la revendication 13 ou 14, **caractérisé en ce que** l'au moins un premier réservoir (SP1 ; SP3) et/ou l'au moins un second réservoir (SP2 ; SP4) sont des parties d'un réservoir total, de préférence d'un ballon à stratification.
